# EUROPEAN PATENT APPLICATION

(11) **EP 4 387 317 A1**
(43) Date of publication of application: **19.06.2024**
(21) Application number: 22866586.5
(22) Date of filing: 06.09.2022
(51) Int. Cl.: H04W 24/08

(54) **COMMUNICATION METHOD AND APPARATUS**

(30) Priority: 10.09.2021 CN 202111062389
(71) Applicant: Huawei Technologies Co., Ltd., Shenzhen, Guangdong 518129 (CN)
(72) Inventor: ZHANG, Haisen, Shenzhen, Guangdong 518129 (CN); CHEN, Lei, Shenzhen, Guangdong 518129 (CN)
(74) Representative: Körber, Martin Hans
(86) International application number: PCT/CN2022/117242
(87) International publication number: WO 2023/036123

(57) **Abstract**

This application provides a communication method and apparatus, to improve performance of a sensing technology. The method includes: sending a sensing signal in response to a sensing request from a first device, and receiving an echo signal of the sensing signal, where the sensing request carries at least one of the following: a sensing data type, sensing configuration information, access network device identifier information, a sensing requirement, and a sensing service identifier; and after the echo signal is received, sending a sensing result to the first device, where the sensing result includes sensing data determined based on the echo signal. Triggering, configuration, execution, processing, reporting, and other functions of a sensing function may be implemented through interaction between the first device and a first access network device, so as to implement execution of a sensing service in a communication system. In addition, the first device indicates the sensing data type, the sensing configuration information, the access network device identifier information, the sensing requirement, and other information to help improve accuracy of sensing by the first access network device.

## Description

### CROSS-REFERENCE TO RELATED APPLICATIONS

This application claims priority to Chinese Patent Application No. 202111062389.9, filed with the China National Intellectual Property Administration on September 10, 2021 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

With development of communication, a location, a distance, and other information of a target object may be obtained by using sensing devices such as a radar or a camera. This technology may be referred to as a sensing technology. The sensing technology may be applied to an emergency system, an automatic driving system, a rail system, and the like.

The sensing devices such as the radar have a small detection distance and low distance resolution. Consequently, the sensing technology cannot support long-distance coverage and high-precision distance resolution. In addition, the sensing devices such as the radar have high networking costs, and there is no mechanism of synchronization between sensing devices, resulting in severe interference between the sensing devices and a coverage hole. Therefore, a high-performance sensing method is urgently needed.

### SUMMARY

This application provides a communication method and apparatus, to improve performance of a sensing technology.

According to a first aspect, this application provides a communication method. The method may be performed by an access network device, or may be performed by a chip or a circuit. The method includes: sending a sensing signal in response to a sensing request from a first device, and receiving an echo signal of the sensing signal, where the sensing request carries at least one of the following: a sensing data type, sensing configuration information, access network device identifier information, a sensing requirement, and a sensing service identifier; and after receiving the echo signal, sending a sensing result to the first device, where the sensing result includes sensing data determined based on the echo signal.

In this embodiment of this application, triggering, configuration, execution, processing, reporting, and other functions of a sensing function may be implemented through interaction between the first device and a first access network device, so as to implement execution of a sensing service in a communication system. In addition, in this embodiment of this application, the first device indicates the sensing data type, a sensing manner, the sensing configuration information, the access network device identifier information, the sensing requirement, and other information to help improve accuracy of sensing by the first access network device.

In a possible design, the sensing data type may be one of the following types: an echo signal; a range/Doppler (range/doppler, RD) spectrum or a range/Doppler/angle (range/Doppler/angle, RDA) spectrum; a distance/velocity (distance/velocity, DV) spectrum, a distance/velocity/angle (distance/velocity/angle, DVA) spectrum, a range/velocity (range/velocity, RV) spectrum, or a range/velocity/angle (range/velocity/angle, RVA) spectrum; and a point cloud including a plurality of data points, where each data point indicates a relative location relative to the first access network device or an absolute location. In the foregoing design, the sensing data type is indicated, so that sensing results reported by a plurality of access network devices are unified, thereby improving sensing accuracy.

In a possible design, the sensing data includes a range/Doppler spectrum or a range/Doppler/angle spectrum in one or more beam directions; or the sensing data includes a DV spectrum, a DVA spectrum, an RV spectrum, or an RVA spectrum in one or more beam directions; or the sensing data includes a point cloud, where the point cloud includes a plurality of data points, and each data point indicates a relative location relative to the first access network device or an absolute location.

In a possible design, the sensing configuration information is used to configure at least one of the following: a sensing manner, a sensing resource, and a result reporting manner.

In a possible design, the sensing manner is periodic scanning, omnidirectional scanning, or directional scanning. The foregoing design helps a sensing operation of the first access network device meet the sensing requirement, thereby improving sensing performance.

In a possible design, the sensing signal may be sent through periodic scanning, omnidirectional scanning, or directional scanning.

In a possible design, the result reporting manner is periodic reporting or event-triggered reporting. According to the foregoing design, a sensing result reporting manner of the first access network device may be aligned with a sensing result reporting manner of the first device, thereby improving sensing performance.

In a possible design, the sensing result may be sent to the first device in the result reporting manner.

In a possible design, the sensing requirement includes a service precision, geographical location information, beam direction information, a scanning periodicity, a sensing time, and a quantity of sampling points. The foregoing design helps the first access network device perform a sensing operation, thereby improving sensing performance.

In a possible design, the access network device identifier information includes identifiers of M access network devices, and the M access network devices include the first access network device, where M is an integer greater than 0. According to the foregoing design, a sensing service may be provided by using the M access network devices, thereby improving sensing performance.

In a possible design, the first access network device determines a resource for sending the sensing signal. The foregoing design helps the first access network device perform resource scheduling, thereby improving resource utilization.

In a possible design, the sensing result further includes at least one of the following: the sensing service identifier, an identifier of the first access network device, a timestamp, a sensing signal distribution of the first access network device, a beam direction, the scanning periodicity, and the quantity of sampling points. According to the foregoing design, the first device may process the sensing data based on a sensing status of the first access network device, thereby improving sensing performance.

In a possible design, the method further includes: sending at least one of the following to the first device: location information of the first access network device, sensing range information of the first access network device, and sensing capability information of the first access network device. According to the foregoing design, sensing-related information is sent to the first device, so that the first device can select an appropriate access network device to perform a sensing operation, thereby improving sensing performance.

In a possible design, the sensing capability information includes at least one of the following: a sensing precision, an echo signal processing support flag, a sensing signal scanning periodicity, a sensing signal bandwidth, a sensing function support flag, and an echo signal processing capability, where the echo signal processing support flag indicates a capability of supporting echo signal processing, and the sensing function support flag indicates that a sensing operation is supported. According to the foregoing design, the first device may learn of a sensing capability of an access network device in detail, thereby improving rationality of selecting an access network device.

In a possible design, the processing capability is one of the following capabilities: determining a range/Doppler spectrum or a range/Doppler/angle spectrum based on an echo signal; determining a range/Doppler spectrum or a range/Doppler/angle spectrum based on an echo signal, and determining a DV spectrum, a DVA spectrum, an RV spectrum, or an RVA spectrum based on the range/Doppler spectrum or the range/Doppler/angle spectrum; and determining a range/Doppler spectrum or a range/Doppler/angle spectrum based on an echo signal, determining a DV spectrum, a DVA spectrum, an RV spectrum, or an RVA spectrum based on the range/Doppler spectrum or the range/Doppler/angle spectrum, and determining a point cloud based on the DV spectrum, the DVA spectrum, the RV spectrum, or the RVA spectrum, where the point cloud includes a plurality of data points, and each data point indicates a relative location relative to the first access network device or an absolute location. The foregoing design helps the first device further learn of a sensing capability of an access network device, so that an appropriate access network device and an access network device with an appropriate capability can be further selected based on an access network capability, thereby improving rationality and flexibility of selecting an access network device.

According to a second aspect, this application provides a communication method. The method may be performed by an application layer server, or may be performed by a core network device, or may be performed by a chip or a circuit. The method includes: sending a sensing request to a first access network device, where the sensing request carries at least one of the following: a sensing data type, sensing configuration information, access network device identifier information, a sensing requirement, and a first sensing service identifier; and receiving a sensing result from the first access network device.

In this embodiment of this application, triggering, configuration, execution, processing, reporting, and other functions of a sensing function may be implemented through interaction between a first device and the first access network device, so as to implement execution of a sensing service in a communication system. In addition, in this embodiment of this application, the first device indicates the sensing data type, a sensing manner, the sensing configuration information, the access network device identifier information, the sensing requirement, and other information to help improve accuracy of sensing by the first access network device.

In a possible design, the sensing data type may be one of the following types: an echo signal; a range/Doppler spectrum or a range/Doppler/angle spectrum; a DV spectrum, a DVA spectrum, an RV spectrum, or an RVA spectrum; and a point cloud including a plurality of data points, where each data point indicates a relative location relative to the first access network device or an absolute location. In the foregoing design, the sensing data type is indicated, so that sensing results reported by a plurality of access network devices are unified, thereby improving sensing accuracy.

In a possible design, the sensing data includes a range/Doppler spectrum or a range/Doppler/angle spectrum in one or more beam directions; or the sensing data includes a DV spectrum, a DVA spectrum, an RV spectrum, or an RVA spectrum in one or more beam directions; or the sensing data includes a point cloud, where the point cloud includes a plurality of data points, and each data point indicates a relative location relative to the first access network device or an absolute location.

In a possible design, the sensing configuration information is used to configure at least one of the following: a sensing manner, a sensing resource, and a result reporting manner.

In a possible design, the sensing manner is periodic scanning, omnidirectional scanning, or directional scanning. The foregoing design helps a sensing operation of the first access network device meet the sensing requirement, thereby improving sensing performance.

In a possible design, the sensing signal may be sent through periodic scanning, omnidirectional scanning, or directional scanning.

In a possible design, the result reporting manner is periodic reporting or event-triggered reporting. According to the foregoing design, a sensing result reporting manner of the first access network device may be aligned with a sensing result reporting manner of the first device, thereby improving sensing performance.

In a possible design, the sensing requirement includes a service precision, geographical location information, beam direction information, a scanning periodicity, a sensing time, and a quantity of sampling points. The foregoing design helps the first access network device perform a sensing operation, thereby improving sensing performance.

In a possible design, the access network device identifier information includes identifiers of M access network devices, and the M access network devices include the first access network device, where M is an integer greater than 0. According to the foregoing design, a sensing service may be provided by using the M access network devices, thereby improving sensing performance.

In a possible design, the sensing result further includes at least one of the following: the sensing service identifier, an identifier of the first access network device, a timestamp, a sensing signal distribution of the first access network device, a beam direction, the scanning periodicity, and the quantity of sampling points. According to the foregoing design, the first device may process the sensing data based on a sensing status of the first access network device, thereby improving sensing performance.

In a possible design, the method further includes: receiving first information of N access network devices, where the first information includes at least one of the following: location information of a corresponding access network device, sensing range information of the corresponding access network device, and sensing capability information of the corresponding access network device, the N access network devices include the first access network device, and N is an integer greater than 0. According to the foregoing design, sensing-related information is sent to the first device, so that the first device can select an appropriate access network device to perform a sensing operation, thereby improving sensing performance.

In a possible design, the sensing capability information includes at least one of the following: a sensing precision, an echo signal processing support flag, a sensing signal scanning periodicity, a sensing signal bandwidth, a sensing function support flag, and an echo signal processing capability, where the echo signal processing support flag indicates a capability of supporting echo signal processing, and the sensing function support flag indicates that a sensing operation is supported. According to the foregoing design, the first device may learn of a sensing capability of an access network device in detail, thereby improving rationality of selecting an access network device.

In a possible design, the processing capability is one of the following capabilities: determining a range/Doppler spectrum or a range/Doppler/angle spectrum based on an echo signal; determining a range/Doppler spectrum or a range/Doppler/angle spectrum based on an echo signal, and determining a DV spectrum, a DVA spectrum, an RV spectrum, or an RVA spectrum based on the range/Doppler spectrum or the range/Doppler/angle spectrum; and determining a range/Doppler spectrum or a range/Doppler/angle spectrum based on an echo signal, determining a DV spectrum, a DVA spectrum, an RV spectrum, or an RVA spectrum based on the range/Doppler spectrum or the range/Doppler/angle spectrum, and determining a point cloud based on the DV spectrum, the DVA spectrum, the RV spectrum, or the RVA spectrum, where the point cloud includes a plurality of data points, and each data point indicates a relative location relative to the first access network device or an absolute location. The foregoing design helps the first device further learn of a sensing capability of an access network device, so that an appropriate access network device and an access network device with an appropriate capability can be further selected based on an access network capability, thereby improving rationality and flexibility of selecting an access network device.

In a possible design, the method further includes: determining, based on the first information of the N access network devices, that an access network device performing a sensing operation includes the first access network device. According to the foregoing design, an appropriate access network device may be selected to provide a sensing service, thereby improving sensing performance.

In a possible design, before the sensing request is sent to the first access network device, the method further includes: receiving a service request from a second device, where the service request is used to request a sensing service, and the service request carries at least one of the following: a service type, a sensing target, a second sensing service identifier, a service precision, sensing configuration information, and a service requirement; and According to the foregoing design, the first device may obtain a requirement for a sensing service, so that the sensing service can be better provided.

In a possible design, the sensing target is a fixed object, or the sensing target is a moving object, or the sensing target is a geographical area, or the sensing target is an identifier.

In a possible design, after the sensing result from the first access network device is received, the method further includes: sending a sensing processing result to the second device, where the sensing processing result is determined based on the sensing result.

In a possible design, the service type is one or more of the following types: an area sensing map, assisted automatic driving, specific event detection, obstacle detection, lane detection, traffic violation detection, and abnormal object detection.

According to a third aspect, this application provides a communication method. The method may be performed by an application layer server, or may be performed by a chip or a circuit. The method includes: sending a service request to a communication device, where the service request is used to request a sensing service, and the service request carries at least one of the following: a service type, a sensing target, a sensing service identifier, a service precision, sensing configuration information, and a service requirement; and receiving a sensing processing result from the communication device.

In this embodiment of this application, triggering, configuration, execution, processing, reporting, and other functions of a sensing function may be implemented through interaction between the communication device and a second device, so as to implement execution of a sensing service in a communication system. In addition, the second device sends the service type, the sensing target, the sensing service identifier, the service precision, the sensing configuration information, and other information to a first device, so that the first device can provide a sensing service that meets a requirement, thereby improving performance of the sensing service and improving user experience.

In a possible design, the sensing configuration information is used to configure at least one of the following: a sensing manner, a sensing resource, and a result reporting manner.

In a possible design, the service type is one or more of the following types: an area sensing map, assisted automatic driving, specific event detection, obstacle detection, lane detection, traffic violation detection, and abnormal object detection.

In a possible design, the communication device is a core network device or an access network device.

According to a fourth aspect, this application provides a communication method. The method may be performed by an access network device, or may be performed by a chip or a circuit. The method includes: sending a sensing signal in response to a service request from a second device, and receiving an echo signal of the sensing signal, where the service request carries at least one of the following: a service type, a sensing target, a sensing service identifier, a service precision, sensing configuration information, and a service requirement; after receiving the echo signal, sending a sensing processing result to the second device, where the sensing processing result is determined based on the echo signal.

In this embodiment of this application, triggering, configuration, execution, processing, reporting, and other functions of a sensing function may be implemented through interaction between the second device and a first access network device, so as to implement execution of a sensing service in a communication system. In addition, in this embodiment of this application, an access network device implements a harmonized communication and sensing technology, so that resources of a core network and an application layer can be reduced.

In a possible design, the method further includes: determining, based on the echo signal in one or more beam directions, a range/Doppler spectrum or a range/Doppler/angle spectrum corresponding to the beam direction; determining, based on the range/Doppler spectrum or the range/Doppler/angle spectrum corresponding to the one or more beam directions, a DV spectrum, a DVA spectrum, an RV spectrum, or an RVA spectrum corresponding to the beam direction; and determining a point cloud based on the DV spectrum, the DVA spectrum, the RV spectrum, or the RVA spectrum corresponding to the one or more beam directions, where the point cloud includes a plurality of data points, each data point indicates a relative location relative to the first access network device, and the sensing processing result includes the point cloud. According to the foregoing design, relative location information of the sensing target may be determined.

In a possible design, the sensing configuration information is used to configure at least one of the following: a sensing manner, a sensing resource, and a result reporting manner.

In a possible design, the sensing signal may be sent to the sensing target on a first resource, where the first resource is determined based on the service type and/or the service precision, or the first resource is configured by using the sensing configuration information. According to the foregoing design, a conflict with a communication resource can be avoided.

In a possible design, the sensing target is a fixed object, or the sensing target is a moving object, or the sensing target is a geographical area, or the sensing target is an identifier.

According to a fifth aspect, this application further provides a communication apparatus, and the apparatus is used in an access network device. The communication apparatus has functions of implementing any method provided in the first aspect or the fourth aspect. The communication apparatus may be implemented by hardware, or may be implemented by hardware executing corresponding software. The hardware or the software includes one or more units or modules corresponding to the foregoing functions.

In a possible design, the communication apparatus includes a processor. The processor is configured to support the communication apparatus in performing a corresponding function of the access network device in the foregoing method. The communication apparatus may further include a memory. The memory may be coupled to the processor, and store program instructions and data that are necessary for the communication apparatus. Optionally, the communication apparatus further includes a first interface circuit and a second interface circuit. The first interface circuit is configured to support the communication apparatus in sending a sensing signal and receiving an echo signal. The second interface circuit is configured to support communication between the communication apparatus and devices such as a first device (or a second device). The first interface circuit and the second interface circuit may be a same interface circuit, or may be different interface circuits.

For example, the communication apparatus has functions of implementing the method provided in the first aspect, and the processor may be configured to: by using the first interface circuit, send a sensing signal in response to a sensing request from the first device, where the sensing request carries at least one of the following: a sensing data type, sensing configuration information, access network device identifier information, a sensing requirement, and a sensing service identifier; receive an echo signal of the sensing signal by using the first interface circuit; and send a sensing result to the first device by using the second interface circuit, where the sensing result includes sensing data determined based on the echo signal.

For another example, the communication apparatus has functions of implementing the method provided in the fourth aspect, and the processor may be configured to: by using the first interface circuit, send a sensing signal in response to a service request from the second device, where the service request carries at least one of the following: a service type, a sensing target, a sensing service identifier, a service precision, sensing configuration information, and a service requirement; receive an echo signal of the sensing signal by using the first interface circuit; and send a sensing processing result to the second device by using the second interface circuit, where the sensing processing result is determined based on the echo signal.

In a possible design, the communication apparatus includes corresponding functional modules for respectively implementing the steps in the foregoing method. The functions may be implemented by hardware, or may be implemented by hardware executing corresponding software. The hardware or the software includes one or more modules corresponding to the foregoing functions.

In a possible design, a structure of the communication apparatus includes a processing unit (or a processing module), a first communication unit (or a first communication module), and a second communication unit (or a second communication module). These units may perform corresponding functions in the foregoing method example. For details, refer to the descriptions in the method provided in the first aspect or the fourth aspect. Details are not described herein again.

For example, the communication apparatus has functions of implementing the method provided in the first aspect, and the processing unit may be configured to: by using the first communication unit, send a sensing signal in response to a sensing request from the first device, where the sensing request carries at least one of the following: a sensing data type, a sensing manner, sensing configuration information, access network device identifier information, a sensing requirement, and a sensing service identifier; receive an echo signal of the sensing signal by using the first communication unit; and send a sensing result to the first device by using the second communication unit, where the sensing result includes sensing data determined based on the echo signal.

For another example, the communication apparatus has functions of implementing the method provided in the fourth aspect, and the processing unit may be configured to: by using the first communication unit, send a sensing signal in response to a service request from the second device, where the service request carries at least one of the following: a service type, a sensing target, a sensing service identifier, a service precision, sensing configuration information, and a service requirement; receive an echo signal of the sensing signal by using the first communication unit; and send a sensing processing result to the second device by using the second communication unit, where the sensing processing result is determined based on the echo signal.

According to a sixth aspect, this application further provides a communication apparatus, and the apparatus is used in a core network device or an application layer server. The communication apparatus has functions of implementing the method provided in the second aspect. The communication apparatus may be implemented by hardware, or may be implemented by hardware executing corresponding software. The hardware or the software includes one or more units or modules corresponding to the foregoing functions.

In a possible design, the communication apparatus includes a processor. The processor is configured to support the communication apparatus in performing a corresponding function of the access network device in the foregoing method. The communication apparatus may further include a memory. The memory may be coupled to the processor, and store program instructions and data that are necessary for the communication apparatus. Optionally, the communication apparatus further includes a first interface circuit, and may further include a second interface circuit. The first interface circuit is configured to support communication between the communication apparatus and devices such as an access network device. The second interface circuit is configured to support communication between the communication apparatus and devices such as an application layer server. The first interface circuit and the second interface circuit may be a same interface circuit, or may be different interface circuits.

For example, the communication apparatus has functions of implementing the method provided in the second aspect, and the processor may be configured to: send a sensing request to a first access network device by using the first interface circuit, where the sensing request carries at least one of the following: a sensing data type, sensing configuration information, access network device identifier information, a sensing requirement, and a first sensing service identifier; and receive a sensing result from the first access network device by using the first interface circuit.

In a possible design, the communication apparatus includes corresponding functional modules for respectively implementing the steps in the foregoing method. The functions may be implemented by hardware, or may be implemented by hardware executing corresponding software. The hardware or the software includes one or more modules corresponding to the foregoing functions.

In a possible design, a structure of the communication apparatus includes a processing unit (or a processing module) and a first communication unit (or a first communication module), and may further include a second communication unit (or a second communication module). These units may perform corresponding functions in the foregoing method example. For details, refer to the descriptions in the method provided in the second aspect. Details are not described herein again.

For example, the communication apparatus has functions of implementing the method provided in the second aspect, and the processing unit may be configured to: send a sensing request to a first access network device by using the first communication unit, where the sensing request carries at least one of the following: a sensing data type, sensing configuration information, access network device identifier information, a sensing requirement, and a first sensing service identifier; and receive a sensing result from the first access network device by using the first communication unit.

According to a seventh aspect, this application further provides a communication apparatus, and the apparatus is used in an application layer server. The communication apparatus has functions of implementing the method provided in the third aspect. The communication apparatus may be implemented by hardware, or may be implemented by hardware executing corresponding software. The hardware or the software includes one or more units or modules corresponding to the foregoing functions.

In a possible design, the communication apparatus includes a processor. The processor is configured to support the communication apparatus in performing a corresponding function of the access network device in the foregoing method. The communication apparatus may further include a memory. The memory may be coupled to the processor, and store program instructions and data that are necessary for the communication apparatus. Optionally, the communication apparatus further includes an interface circuit. The interface circuit is configured to support communication between the communication apparatus and devices such as a first access network device (or a first device).

For example, the communication apparatus has functions of implementing the method provided in the third aspect, and the processor may be configured to: send a service request to a communication device by using the interface circuit, where the service request is used to request a sensing service, and the service request carries at least one of the following: a service type, a sensing target, a sensing service identifier, a service precision, sensing configuration information, and a service requirement; and receive a sensing processing result from the communication device by using the interface circuit.

In a possible design, the communication apparatus includes corresponding functional modules for respectively implementing the steps in the foregoing method. The functions may be implemented by hardware, or may be implemented by hardware executing corresponding software. The hardware or the software includes one or more modules corresponding to the foregoing functions.

In a possible design, a structure of the communication apparatus includes a processing unit (or a processing module) and a communication unit (or a communication module). These units may perform corresponding functions in the foregoing method example. For details, refer to the descriptions in the method provided in the third aspect. Details are not described herein again.

For example, the communication apparatus has functions of implementing the method provided in the third aspect, and the processing unit may be configured to: send a service request to a communication device by using the communication unit, where the service request is used to request a sensing service, and the service request carries at least one of the following: a service type, a sensing target, a sensing service identifier, a service precision, sensing configuration information, and a sensing requirement; and receive a sensing processing result from the communication device by using the communication unit.

According to an eighth aspect, a communication apparatus is provided, including a processor and an interface circuit. The interface circuit is configured to: receive a signal from another communication apparatus other than the communication apparatus, and transmit the signal to the processor or send a signal from the processor to the another communication apparatus other than the communication apparatus. The processor is configured to implement the method in any one of the first aspect or the fourth aspect and the possible designs by using a logic circuit or executing code instructions.

According to a ninth aspect, a communication apparatus is provided, including a processor and an interface circuit. The interface circuit is configured to: receive a signal from another communication apparatus other than the communication apparatus, and transmit the signal to the processor or send a signal from the processor to the another communication apparatus other than the communication apparatus. The processor is configured to implement the method in any one of the second aspect and the possible designs by using a logic circuit or executing code instructions.

According to a tenth aspect, a communication apparatus is provided, including a processor and an interface circuit. The interface circuit is configured to: receive a signal from another communication apparatus other than the communication apparatus, and transmit the signal to the processor or send a signal from the processor to the another communication apparatus other than the communication apparatus. The processor is configured to implement the method in any one of the third aspect and the possible designs by using a logic circuit or executing code instructions.

According to an eleventh aspect, a computer-readable storage medium is provided. The computer-readable storage medium stores a computer program or instructions. When the computer program or the instructions are executed by a processor, the method in any one of the first aspect to the fourth aspect and any possible design is implemented.

According to a twelfth aspect, a computer program product storing instructions is provided. When the instructions are run by a processor, the method in any one of the first aspect to the fourth aspect and any possible design is implemented.

According to a thirteenth aspect, a chip system is provided. The chip system includes a processor, and may further include a memory, configured to implement the method in any one of the first aspect to the fourth aspect and any possible design. The chip system may include a chip, or may include a chip and another discrete component.

According to a fourteenth aspect, a communication system is provided. The system includes the apparatus (for example, an access network device) according to the first aspect and the apparatus (for example, a first device) according to the second aspect. The first device may be an application layer device.

According to a fifteenth aspect, a communication system is provided. The system includes the apparatus (for example, an access network device) according to the first aspect, the apparatus (for example, a first device) according to the second aspect, and the apparatus (for example, a second device) according to the third aspect. The first device may be a core network device, and the second device may be an application layer device.

According to a sixteenth aspect, a communication system is provided. The system includes the apparatus (for example, an access network device) according to the fourth aspect and the apparatus (for example, a second device) according to the third aspect. The second device may be an application layer device.

### BRIEF DESCRIPTION OF DRAWINGS

FIG. 1 is a schematic flowchart of a harmonized communication and sensing technology according to an embodiment of this application;
FIG. 2 is a schematic diagram of an architecture of a communication system according to an embodiment of this application;
FIG. 3 is a schematic diagram of a harmonized communication and sensing architecture according to an embodiment of this application;
FIG. 4 is a schematic diagram of a harmonized communication and sensing architecture according to an embodiment of this application;
FIG. 5 is a schematic diagram of a harmonized communication and sensing architecture according to an embodiment of this application;
FIG. 6 is a schematic diagram of a harmonized communication and sensing architecture according to an embodiment of this application;
FIG. 7 is a schematic diagram of a harmonized communication and sensing architecture according to an embodiment of this application;
FIG. 8 is a schematic diagram of a harmonized communication and sensing architecture according to an embodiment of this application;
FIG. 9 is a schematic diagram of a harmonized communication and sensing architecture according to an embodiment of this application;
FIG. 10 is a schematic diagram of a harmonized communication and sensing architecture according to an embodiment of this application;
FIG. 11 is a schematic flowchart of a communication method according to an embodiment of this application;
FIG. 12 is a schematic flowchart of a communication method according to an embodiment of this application;
FIG. 13 is a schematic flowchart of a communication method according to an embodiment of this application;
FIG. 14 is a schematic diagram of a structure of a communication apparatus according to an embodiment of this application;
FIG. 15 is a schematic diagram of a structure of a communication apparatus according to an embodiment of this application;
FIG. 16 is a schematic diagram of a structure of a communication apparatus according to an embodiment of this application; and
FIG. 17 is a schematic diagram of a structure of a communication apparatus according to an embodiment of this application.

### DESCRIPTION OF EMBODIMENTS

To make objectives, technical solutions, and advantages of embodiments of this application clearer, the following further describes the embodiments of this application in detail with reference to the accompanying drawings.

The following describes some terms in the embodiments of this application, to facilitate understanding of a person skilled in the art.
(1) Sensing: The sensing means detecting a parameter of a physical environment, such as speed testing and target positioning. It may be understood that an object detection system detects a target by transmitting an electromagnetic wave and analyzing an echo signal reflected by an obj ect.
   The sensing may also be referred to as detection.
(2) Sensing signal: The sensing signal is a signal for sensing (or detecting) a sensed target (or referred to as a target object). The sensing signal is also referred to as a detection signal, a linear frequency modulation signal, a radar signal, a radar sensing signal, a radar detection signal, an environment sensing signal, or the like. The sensing signal may be a pulse signal, or may be a possible signal in a wireless communication system, for example, an orthogonal frequency division multiplexing (orthogonal frequency division multiplexing, OFDM) signal. Compared with the sensing signal, a signal communicated between a network device and a terminal device may be considered as a communication signal, for example, a signal carried on a physical downlink shared channel (physical downlink shared channel, PDSCH).
(3) Echo signal: The echo signal is a signal that is reflected to a receiver after a sensing signal is transmitted from a transmitter to a target object. Autocorrelation processing is performed on the echo signal and the sensing signal, and then a delay of the echo signal relative to the sensing signal in time domain may be obtained through analysis by performing conversion, so that a distance of a sensing target to a transmit source can be reflected. By comparing different transmitted signals with echo signals reflected by a same target, the echo signals may be converted into a Doppler domain. A distance and a speed of the sensing target may be obtained through analysis by combining the Doppler domain and a distance domain. In addition, a direction of the sensing target relative to the transmit source may be obtained by using a beam direction of an antenna that transmits the sensing signal.
(4) Harmonized communication and sensing (harmonized communication and sensing, HCS): The harmonized communication and sensing may be understood as that communication and sensing functions are combined, so that a communication system has both the communication and sensing functions. To be specific, the communication system supports information transmission on a wireless channel, and also supports sensing of a physical feature of a surrounding environment by actively recognizing and analyzing a channel feature, so as to implement mutual enhancement of the communication and sensing functions. In the harmonized communication and sensing technology, a sensing device may send a sensing signal, and receive a signal (also referred to as an echo signal) obtained after the sent sensing signal is reflected by a sensed target, to determine attribute information of the sensed target, for example, a speed, a distance, a shape, and a size of the sensed target. The sensed target may be a fixed object, for example, a mountain, a forest, or a building, or may be a movable object, for example, a vehicle, an uncrewed aerial vehicle, a pedestrian, or a terminal device. The sensing device may also be referred to as a sensing apparatus, or may be referred to as a detector or the like, or may be referred to as a communication device (such as a terminal device or an access network device) having a sensing function. The sensing function may include at least a capability of sending a sensing signal and receiving an echo signal of the sensing signal.

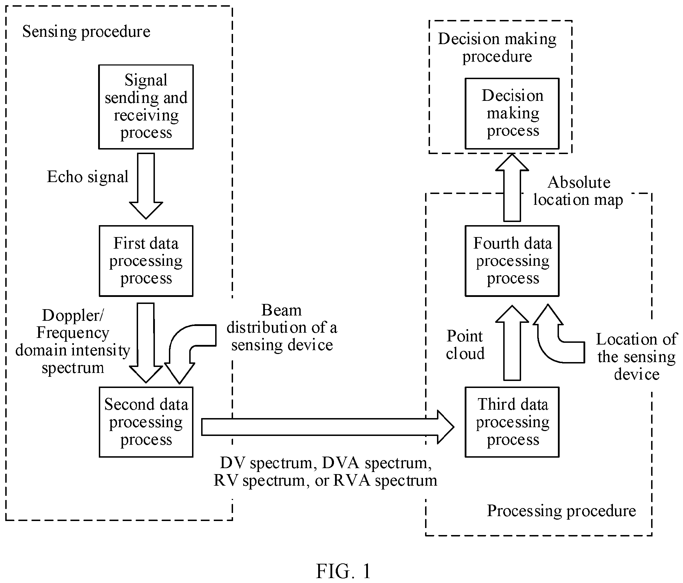

As shown in FIG. 1, a harmonized communication and sensing process may include a signal sending and receiving process, a first data processing process, a second data processing process, a third data processing process, a fourth data processing process, and a decision making process.

The signal sending and receiving process may include sending a sensing signal and receiving an echo signal of the sensing signal.

The first data processing process may include processing the echo signal to obtain a range/Doppler spectrum or a range/Doppler/angle spectrum.

The second data processing process may include processing the range/Doppler spectrum or the range/Doppler/angle spectrum to obtain a DV spectrum, a DVA spectrum, an RV spectrum, or an RVA spectrum. In the second data processing process, the range/Doppler spectrum or the range/Doppler/angle spectrum may be processed based on a beam distribution of a sensing device.

The third data processing process may be processing the DV spectrum, the DVA spectrum, the RV spectrum, or the RVA spectrum to obtain a point cloud, where the point cloud includes a plurality of data points, and each data point represents a relative location relative to the sensing device. The point cloud may be understood as a location map in a relative coordinate system, and the relative coordinate system may be related to a location of the sensing device.

The fourth data processing process may be processing the point cloud to obtain an absolute location map. The absolute location map may be understood as a location map in an absolute coordinate system, and the absolute coordinate system may be a longitude and latitude coordinate system or the like, or may be a preset relative coordinate system that is based on a reference point. In the fourth data processing process, the point cloud may be processed based on the location of the sensing device.

The decision making process may be processing the absolute location map, for example, based on a sensing result through a clustering algorithm, track detection, association, or the like, to obtain a specific feature or category of a sensing target through analysis.

It should be understood that the sensing procedure, the processing procedure, and the decision making procedure in FIG. 1 are merely example division. In a specific embodiment, two procedures, four procedures, or the like may be obtained through division. This is not specifically limited herein. In addition, a process included in each procedure is also an example. In a specific embodiment, the second data processing process and the third data processing process may alternatively belong to the processing procedure. In this embodiment, the sensing procedure includes the signal sending and receiving process and the first data processing process. Alternatively, the third data processing process and the fourth data processing process may belong to the sensing procedure. It may be understood that, when both the third data processing process and the fourth data processing process belong to the sensing procedure, the harmonized communication and sensing process may not include the processing procedure.

(5) Resource: The resource includes a time domain resource, a frequency domain resource, a space domain resource, a code domain resource, and the like, and may be considered as a resource pair formed by the time domain resource, the frequency domain resource, the space domain resource, and the code domain resource. The time domain resource is an OFDM symbol occupied in time domain. A minimum granularity of the time domain resource is not limited in embodiments of this application. For example, the minimum granularity of the time domain resource is one OFDM symbol, or may be a mini-slot (mini-slot), a slot (slot), or the like. One mini-slot may include two or more OFDM symbols, and one slot includes 14 OFDM symbols.

The frequency domain resource is a frequency resource occupied in frequency domain. A minimum granularity of the frequency domain resource may be one subcarrier or a resource element (resource element, RE), or may be a physical resource block (physical resource block, PRB), a resource block group (resource block group, RBG), or the like. One PRB includes 12 REs in frequency domain, and one RBG may include two PRBs, four PRBs, eight PRBs, or 16 PRBs.

The space domain resource may also be referred to as a beam, and the beam may be classified into a transmit beam and a receive beam. The transmit beam means a signal strength distribution formed in different directions in space after a signal is transmitted by an antenna. The receive beam means a signal strength distribution, in different directions in space, of a signal received from an antenna. One beam may include one or more antenna ports. Different beams may be considered as different resources.

The code domain resource may also be a sequence or symbol resource used for sensing, for example, a ZC (Zadoff-Chu) sequence. The code domain resource used for sensing may be different from a code domain resource used for communication, or may be the same as a code domain resource used for sensing. This is not specifically limited.

In embodiments of this application, "at least one" means one or more, and "a plurality of" means two or more. In addition, "and/or" describes an association relationship between associated objects, and represents that three relationships may exist. For example, A and/or B may represent the following cases: Only A exists, both A and B exist, and only B exists, where A and B may be singular or plural. A character "/" generally indicates an "or" relationship between the associated objects. In addition, "at least one of the following items (pieces) " or a similar expression thereof means any combination of these items, including any combination of singular items (pieces) or plural items (pieces). For example, at least one of a, b, or c may indicate: a, b, c, a and b, a and c, b and c, or a, b, and c, where a, b, and c may be singular or plural.

Moreover, unless otherwise stated on the contrary, ordinal terms such as "first" and "second" mentioned in embodiments of this application are used to distinguish between a plurality of objects, and are not intended to limit sizes, content, a sequence, a time sequence, priorities, importance degrees, or the like of the plurality of obj ects. For example, a first device and a second device are merely used to distinguish between different devices, but do not indicate that priorities, importance degrees, or the like of the two devices are different.

The foregoing describes some noun concepts used in embodiments of this application. The following describes technical features of embodiments of this application.

With development of communication, a physical location, a distance, a size, and other information of a target may be obtained by using sensing devices such as a radar or a camera. This technology may be referred to as a sensing technology. The sensing technology may be applied to an emergency system, an automatic driving system, a rail system, and the like. However, the sensing devices such as the radar have a small detection distance and low distance resolution. Consequently, the sensing technology cannot support long-distance coverage and high-precision distance resolution. In addition, the sensing devices such as the radar have high networking costs, and there is no mechanism of synchronization between sensing devices, resulting in severe interference between the sensing devices and a coverage hole. To resolve this problem, a harmonized communication and sensing technology is proposed currently, that is, sensing is performed by using a base station or the like. The harmonized communication and sensing can improve sensing precision and reduce networking difficulty and costs. However, how to execute a sensing service in a communication system is an urgent problem to be resolved.

Based on this, embodiments of this application provide a communication method and apparatus, to implement execution of a sensing service in a communication system. The method and the apparatus are based on a same technical concept. Because problem-resolving principles of the method and the apparatus are similar, mutual reference may be made to implementations of the apparatus and the method, and repeated descriptions are not described again.

The communication method provided in this application may be applied to various communication systems. For example, the communication system may be the internet of things (internet of things, IoT), the narrowband internet of things (narrowband internet of things, NB-IoT), or long term evolution (long term evolution, LTE), or may be a 5th generation (5th generation, 5G) communication system, or may be an LTE and 5G hybrid architecture, or may be a new communication system in 6G or future communication development. Alternatively, the communication system may be a machine to machine (machine to machine, M2M) network, machine type communication (machine type communication, MTC), or another network.

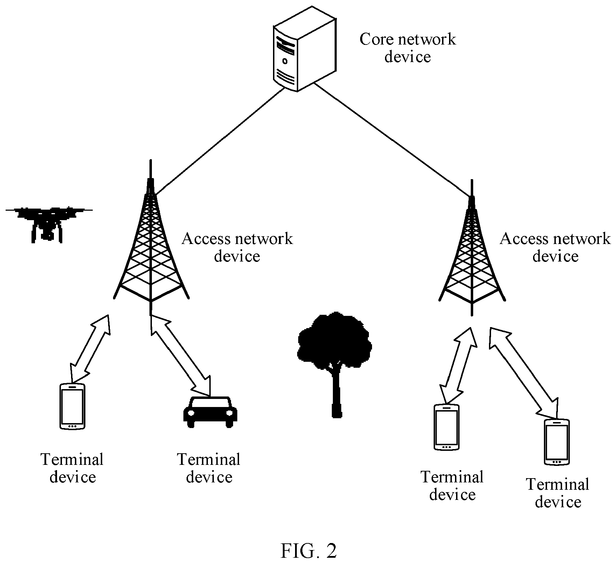

For example, FIG. 2 is a schematic diagram of an architecture of a communication system to which an embodiment of this application is applicable. The system shown in FIG. 2 includes a core network device, an access network device, and a terminal device.

The foregoing terminal device may be an entity configured to receive or transmit a signal on a user side, and may also be referred to as user equipment (user equipment, UE), an access terminal, a subscriber unit, a subscriber station, a mobile station, a remote station, a remote terminal, a mobile device, a user terminal, a wireless communication device, a user agent, or a user apparatus. The terminal device in embodiments of this application may be a mobile phone (mobile phone), a tablet computer (Pad), a computer having a wireless transceiver function, a virtual reality (virtual reality, VR) terminal, an augmented reality (augmented reality, AR) terminal, a wireless terminal in industrial control (industrial control), a wireless terminal in self-driving (self-driving), a wireless terminal in video surveillance, a wearable terminal device, customer-premises equipment (customer-premises equipment, CPE), or the like.

Optionally, the terminal device may also be used as a sensing device. For example, the terminal device may have a sensing function, or a sensing device having a sensing function is installed in the terminal device.

In embodiments of this application, an apparatus configured to implement a function of a terminal device may be a terminal device, or may be an apparatus, for example, a chip system, that can support the terminal device in implementing the function, and the apparatus may be installed in the terminal device. In embodiments of this application, the chip system may include a chip, or may include a chip and another discrete component. In the technical solutions provided in embodiments of this application, an example in which the apparatus configured to implement a function of a terminal is a terminal device is used to describe the technical solutions provided in the embodiments of this application.

The access network device may be an entity configured to transmit or receive a signal on a network side, for example, a device that communicates with a wireless terminal device over an air interface in an access network by using one or more cells. The access network device may be a next generation NodeB (next generation NodeB, gNB) in an NR system, or may be an evolved NodeB (evolved NodeB, eNB) in an LTE system, or the like. In embodiments of this application, an apparatus configured to implement a function of an access network device may be an access network device, or may be an apparatus, for example, a chip system, that can support the access network device in implementing the function, and the apparatus may be installed in the access network device. In the technical solutions provided in embodiments of this application, an example in which the apparatus configured to implement a function of an access network device is an access network device is used to describe the technical solutions provided in the embodiments of this application.

Optionally, the access network device may also be used as a sensing device. For example, the access network device may have a sensing function, or a sensing device having a sensing function is installed in the access network device.

The core network device may be a general term of a plurality of function entities used for user management, data transmission, and access network device configuration on the network side, and includes an access and mobility management function (access and mobility management function, AMF), a user plane function (user plane function, UPF), a session management function (session management function, SMF), and the like. In embodiments of this application, an apparatus configured to implement a function of a core network device may be a core network device, or may be an apparatus, for example, a chip system, that can support the core network device in implementing the function, and the apparatus may be installed in the core network device. In the technical solutions provided in embodiments of this application, an example in which the apparatus configured to implement a function of a core network device is a core network device is used to describe the technical solutions provided in the embodiments of this application.

The following describes three possible harmonized communication and sensing architectures by using an example in which an access network device has a sensing function.

Example 1: The harmonized communication and sensing architecture may be an architecture that is based on an application layer, that is, a harmonized communication and sensing system may include an access network device and an application layer sensing server.

The access network device has a sensing function, and is configured to obtain sensing data by using a sensing signal. For example, the access network device may have a capability of supporting the sensing procedure in the foregoing term introduction (4).

The sensing server may also be referred to as a sensing service node, a service layer node, or the like. The sensing server has a capability of supporting the processing procedure and the decision-making procedure in the foregoing term introduction (4). The sensing server in this application may have a sensing service requirement. For example, in an area sensing map scenario (which may also be referred to as a map service), the sensing server may be a server of a navigation application, a server of a positioning application, or the like. In an assisted automatic driving scenario, the sensing server may be a server of an automatic driving application or a server of a safe driving application. In a disaster/abnormal object/abnormal event detection scenario, the sensing server may be a server of a security warning application or the like.

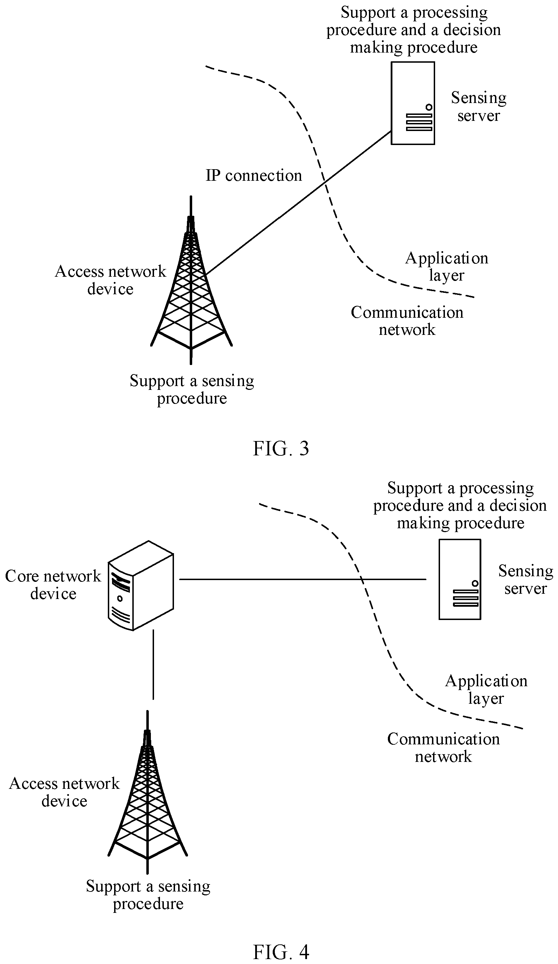

In the harmonized communication and sensing architecture in this example, the access network device may be connected to the sensing server, as shown in FIG. 3. In an example, the access network device may be connected to the sensing server by using the internet protocol (Internet Protocol, IP).

Alternatively, the harmonized communication and sensing system may further include a core network device, and the access network device may be connected to the sensing server through the core network device, where the core network device may be a UPF, an AMF, or the like, as shown in FIG. 4.

Example 2: The harmonized communication and sensing architecture may be an architecture that is based on an application layer, that is, a harmonized communication and sensing system may include an access network device and a sensing service network element of a core network. It should be understood that the sensing service network element is merely an example name, and does not specifically limit a name of the network element.

The access network device has a sensing function, and is configured to obtain sensing data by using a sensing signal. For example, the access network device may have a capability of supporting the sensing procedure in the foregoing term introduction (4).

The sensing service network element has the same function as the sensing server in Example 1. A difference lies in that the sensing server in Example 1 is a server at the application layer, while the sensing service network element in this example is a network element in the core network.

In the harmonized communication and sensing architecture in this example, the access network device may be connected to the sensing service network element, and the sensing service network element may be connected to an application layer server, where the application layer server may be a server that generates a sensing requirement at the application layer.

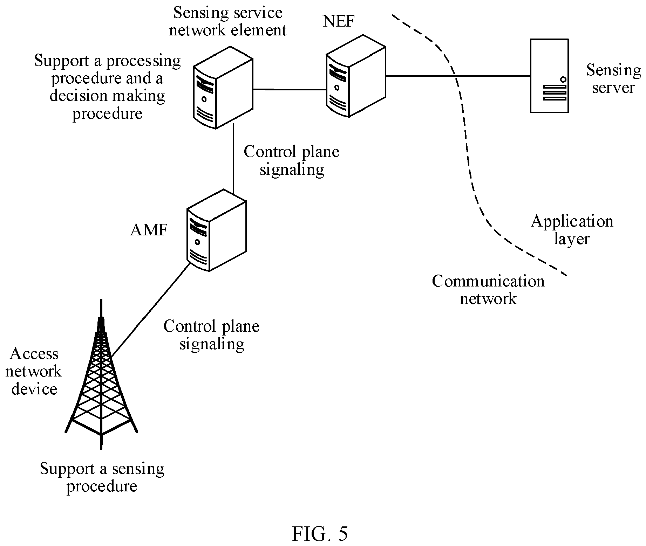

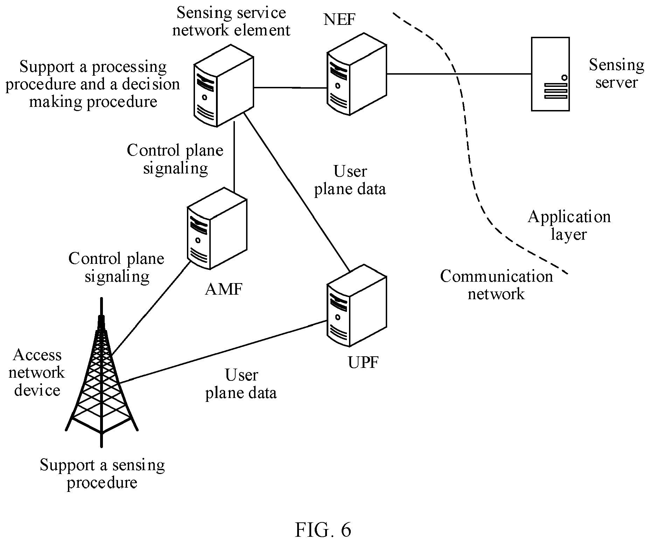

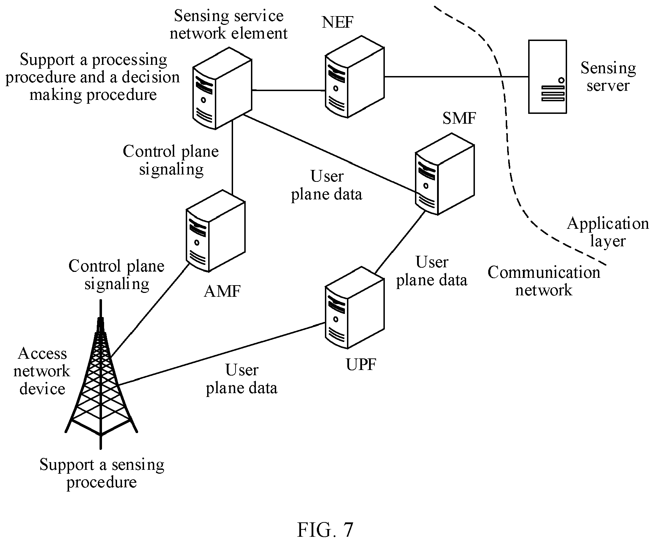

In an implementation, the sensing service network element may be connected to the application layer server by using a network exposure function (network exposure function, NEF) network element, and by using an AMF network element, the access network device may send control plane signaling to the sensing service network element or receive control plane signaling sent by the sensing service network element, as shown in FIG. 5. Optionally, in this implementation, by using a UPF network element, the access network device may send user plane data to the sensing service network element or receive user plane data sent by the sensing server, as shown in FIG. 6. Alternatively, by using a UPF network element and an SMF network element, the access network device may send user plane data to the sensing service network element or receive user plane data sent by the sensing server, as shown in FIG. 7.

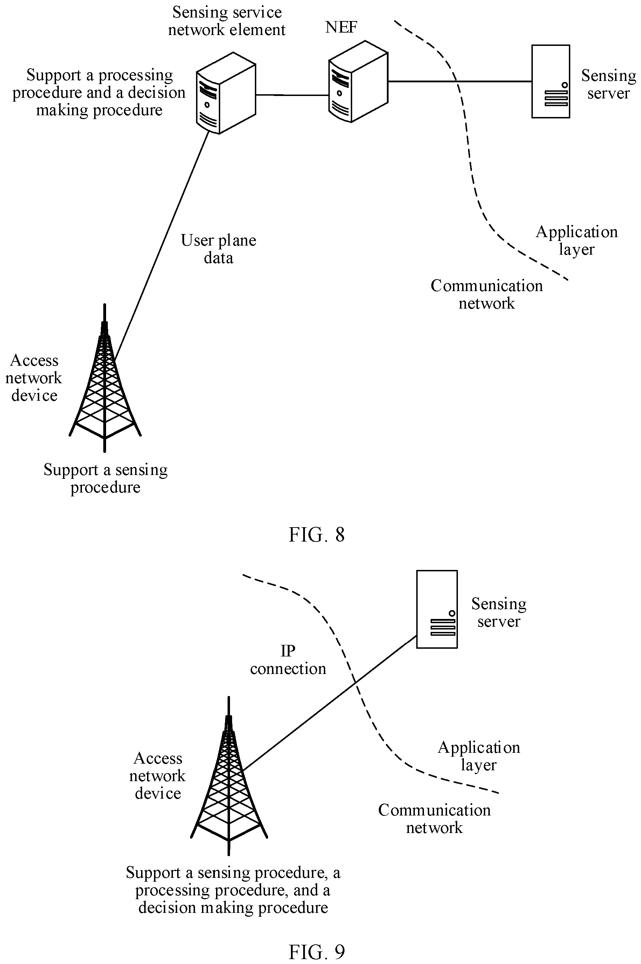

In another implementation, the access network device may be directly connected to the sensing service network element, and the sensing service network element may be connected to the application layer server by using an NEF network element, as shown in FIG. 8.

Example 3: The harmonized communication and sensing architecture may be an architecture that is based on an application layer, that is, a harmonized communication and sensing system may include an access network device and an application layer sensing server.

The access network device has a sensing function, and is configured to obtain sensing data by using a sensing signal. For example, the access network device may have a capability of supporting the sensing procedure, the processing procedure, and the decision making procedure in the foregoing term introduction (4).

The sensing server may also be referred to as a sensing service node, a service layer node, or the like. The sensing server in this application may have a sensing service requirement. For example, in an area sensing map scenario, the sensing server may be a server of a navigation application, a server of a positioning application, or the like. In an assisted automatic driving scenario, the sensing server may be a server of an automatic driving application or a server of a safe driving application. In a disaster/abnormal object/abnormal event scenario, the sensing server may be a server of a security warning application or the like.

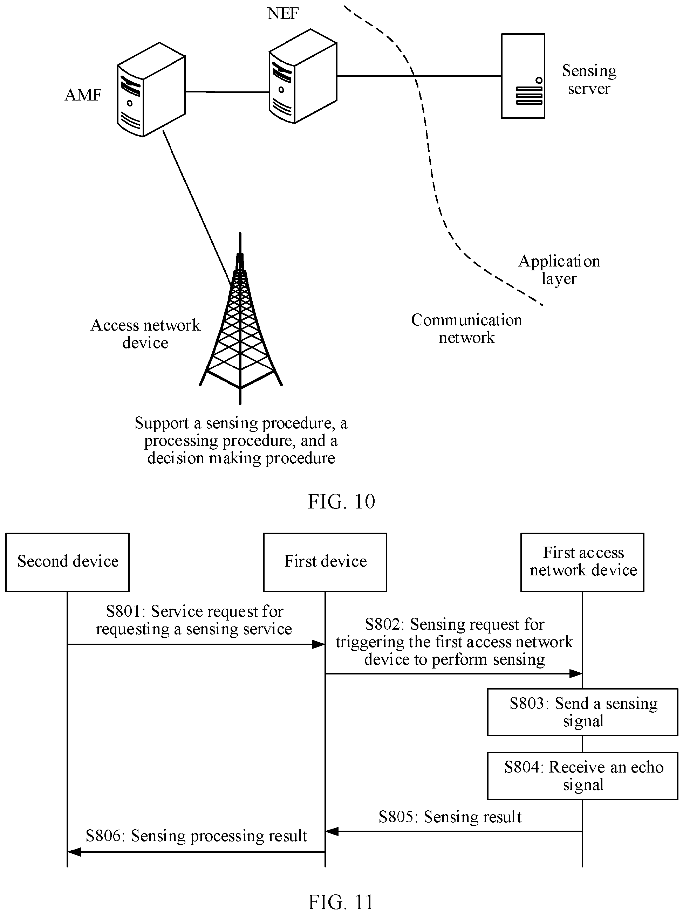

In the harmonized communication and sensing architecture in this example, the access network device may be directly connected to the sensing server, as shown in FIG. 9. Alternatively, the harmonized communication and sensing system may further include a core network device, and the access network device may be connected to the sensing server through the core network device, where the core network device may include an AMF, an NEF, or the like, as shown in FIG. 10.

It should be understood that processing performed by a single execution body (for example, the access network device, the sensing server, or the sensing service network element) shown in embodiments of this application may alternatively be performed by a plurality of execution bodies through division. These execution bodies may be logically and/or physically separated. For example, when the access network device is a whole of a CU and a DU, processing performed by the access network device may be performed by the CU and the DU through division. For another example, processing performed by the sensing service network element may be performed by a plurality of network elements.

A network architecture described in embodiments of this application is intended to describe the technical solutions in embodiments of this application more clearly, and does not constitute a limitation on the technical solutions provided in embodiments of this application. A person of ordinary skill in the art may learn that, with evolution of the network architecture, the technical solutions provided in embodiments of this application are also applicable to similar technical problems.

The following describes the technical solutions in embodiments of this application with reference to the accompanying drawings in embodiments of this application. For example, a method provided in an embodiment of this application may be applied to a disaster/abnormal object/abnormal event detection scenario, a vehicle violation detection scenario, an area sensing map scenario, an assisted automatic driving scenario, and the like. For example, in the disaster/abnormal object/abnormal event detection scenario, continuous monitoring may be performed on a specific area by using the harmonized communication and sensing technology, to detect a meteorological disaster, an abnormal event or object, an illegal uncrewed aerial vehicle, a track running status, an emergency, or the like. In the vehicle violation detection scenario, continuous sensing and monitoring may be performed on a vehicle by using the harmonized communication and sensing technology, to detect whether vehicle violation (speeding, parking violation, or bus lane occupation) or the like exists. In the assisted automatic driving scenario, automatic driving of a vehicle may be assisted by using the harmonized communication and sensing technology. For example, a distance between the vehicle and a lane line is sensed by using the harmonized communication and sensing technology, to determine whether the vehicle deviates from a route. In the area sensing map scenario, real-time dynamic map data may be obtained for an object (such as a mountain, a tree, or a building) in a specified area by using the harmonized communication and sensing technology.

In addition, the method provided in this embodiment of this application may be further applied to a security protection scenario in which a camera cannot be installed for detection. For example, specific industrial parks can be detected. For another example, in an area in the air, a flight object such as an uncrewed aerial vehicle in the area may be detected. By monitoring flight of the uncrewed aerial vehicle, flight information (airspace, a model, a manufacturer, a height, a frequency, a time point with a high flight frequency, and the like) of the uncrewed aerial vehicle may be obtained through data analysis, so that the uncrewed aerial vehicle in the airspace can be effectively managed by using the information. Specifically, a flight source of the uncrewed aerial vehicle may be found based on a large quantity of flight paths, heights, and the like of the uncrewed aerial vehicle that are obtained through analysis, so as to provide a management measure such as flight stopping for the uncrewed aerial vehicle; or electromagnetic interference is performed based on the frequency information of the uncrewed aerial vehicle, to suppress flight of the uncrewed aerial vehicle and the like.

The method provided in this embodiment of this application may also be applied to a traffic scenario. For example, sensing may be performed by using an access network device (for example, a roadside station), to complete traffic flow statistics collection, vehicle navigation, assisted automatic driving, and other functions.

In addition, the method may also be applied to a monitoring and identification system of smart home to identify human behavior.

A scenario described in embodiments of this application is intended to describe the technical solutions in embodiments of this application more clearly, and does not constitute a limitation on the technical solutions provided in embodiments of this application. A person of ordinary skill in the art may learn that, with emergence of a new scenario, the technical solutions provided in embodiments of this application are also applicable to similar technical problems.

With reference to the foregoing three harmonized communication and sensing architectures, the following describes the method provided in this application. It should be understood that this application is described by using only an example in which the access network device has a sensing function. In a specific embodiment, another communication device (for example, the terminal device) may have a sensing function, and perform an operation of a first access network device in embodiments of this application. It may be understood that, if the terminal device performs the operation of the first access network device, the terminal device may communicate with the sensing server (or the sensing service network element) or the like through the access network device.

It should be noted that, in embodiments of this application, information carried in a message such as a service request or a sensing request may be carried in the message as independent information, or may be carried in the message as sub-information of a type of information. This is not specifically limited in this application.

With reference to the harmonized communication and sensing architecture described in Example 2, FIG. 11 is a schematic flowchart of a communication method according to this application. The method includes the following steps.

S801: A second device sends a service request to a first device. Correspondingly, the first device receives the service request from the second device.

In this embodiment of this application, the second device may be the sensing server in the harmonized communication and sensing architecture described in Example 2. In this embodiment of this application, the first device may be the sensing service network element in the harmonized communication and sensing architecture described in Example 2. A first access network device may be the access network device in the harmonized communication and sensing architecture described in Example 2.

In this manner, the service request may be used to request a sensing service. The sensing service may be provided by performing the sensing procedure, the processing procedure, and the decision making procedure in the foregoing term introduction (4). It may be understood that the sensing service may be provided by the access network device, that is, the access network device performs the sensing procedure, the processing procedure, and the decision making procedure. Alternatively, the sensing service may be provided by the access network device and the first device. For example, the access network device performs the sensing procedure, and the first device performs the processing procedure and the decision making procedure. For another example, the access network device performs the sensing procedure and the processing procedure, and the first device performs the decision making procedure.

Alternatively, the service request may be used to request a sensing processing result, and the sensing processing result requested by using the service request may be a result of the decision making procedure in the foregoing term introduction (4). The following further relates to a term "sensing result". Herein, a difference between the "sensing result" and the "sensing processing result" is described. The sensing processing result may be understood as data that can reflect a sensing target feature (such as a preset identifier, a location, a size, and a shape). The sensing result may be intermediate data for obtaining the sensing processing result, and may include but is not limited to an echo signal, a range/Doppler spectrum, a range/Doppler/angle spectrum, a DV spectrum, an RV spectrum, a DVA spectrum, an RVA spectrum, a point cloud, and the like.

Specifically, the service request may carry at least one of the following: a service type, a sensing target, a sensing service identifier, a service precision, sensing configuration information, and a service requirement. It should be noted that the foregoing information may be sent to the first device by using one message (for example, the service request), or may be sent to the first device by using a plurality of messages. For example, one message may carry a subset of the foregoing information.

The service type may be one or more of the following types: an area sensing map, assisted automatic driving, assisted automatic driving, specific event detection, obstacle detection, lane detection, traffic violation detection, abnormal object detection, abnormal event detection, and disaster detection. It should be noted that only several service types are listed herein as an example. This embodiment of this application may alternatively be applied to another service type that is not shown. This is not specifically limited herein. In a possible implementation, service types may correspond to different sensing type identifiers. For example, a sensing type identifier 1 corresponds to an area sensing map service.

The sensing target may be a fixed object, for example, a mountain, a forest, or a building, or may be a movable object, for example, a vehicle, an uncrewed aerial vehicle, a pedestrian, or a terminal device. Alternatively, the sensing target may be a geographical area, and the geographical area may be land, ocean, air, or the like. In an example, the sensing target may be represented as a longitude, a latitude, and an altitude, to indicate an object that does not exist in an existing communication system. In another example, the sensing target may be one of a plurality of location sequence numbers, and the plurality of location sequence numbers identify different areas obtained through spatial division, to indicate an object that does not exist in an existing communication system. In another example, the sensing target is represented as one or more cell lists, or may be represented as one or more TA lists, or may be represented as one or more specific terminal identifier lists, to indicate the sensing target. In another example, the sensing target is a specified identifier indicating the sensing target, and may be an identifier allocated by the first access network device or an identifier allocated by the second device. A specific name and indication manner are not limited, provided that a target area or range of sensing can be indicated.

The sensing configuration information may be used to configure at least one of the following: a sensing manner, a sensing resource, and a result reporting manner. In an implementation, the sensing resource may be determined by the second device and sent to the first device by using the service request, and the first device sends the sensing configuration information in the sensing request to the first access network device. It may be understood that this manner is an optional solution provided in this embodiment of this application. In another optional solution, the sensing resource may alternatively be determined by the first device or the first access network device. It may be understood that the sensing manner, the sensing resource, and the result reporting manner may alternatively be used as independent information, and are included in the service request.

The sensing manner may be periodic scanning, omnidirectional scanning, directional scanning, or the like.

The result reporting manner may be periodic reporting, event-triggered reporting, or the like.

A reporting periodicity may be indicated by the second device, for example, indicated by using the service request or other signaling. Alternatively, the reporting periodicity may be preconfigured. Alternatively, the reporting periodicity may be predefined in a protocol. Optionally, there may be a correspondence between a reporting periodicity and a sensing service type (or a sensing business type or a sensing scenario). For example, a reporting periodicity corresponding to a disaster/abnormality sensing service (that is, a disaster/abnormal object/abnormal event detection scenario) may be a periodicity 1, and a reporting periodicity corresponding to an assisted automatic driving service (that is, an assisted automatic driving scenario) may be a periodicity 2.

An event that triggers sensing processing result reporting may be indicated by the second device, for example, indicated by using the service request or other signaling. Alternatively, the event that triggers sensing processing result reporting may be preconfigured. Alternatively, the event that triggers sensing processing result reporting may be predefined in a protocol. Optionally, there may be a correspondence between an event that triggers sensing processing result reporting and a sensing service type (or a sensing business type or a sensing scenario). For example, a specified event corresponding to a disaster/abnormality sensing service (that is, a disaster/abnormal object/abnormal event detection scenario) may be an event 1. For example, the event 1 may be that an uncrewed aerial vehicle that is not allowed (for example, not registered or not authenticated) appears in a sensing area. A specified event corresponding to an assisted automatic driving service (that is, an assisted automatic driving scenario) may be an event 2. For example, the event 2 may be that an obstacle appears on a driving route of a vehicle. A specified event corresponding to a violation detection service may be an event 3. For example, the event 3 may be that a speeding vehicle appears on a road.

The service requirement may include a service precision (or service resolution), geographical location information, a service time, or the like. In a specific implementation, the service precision may be set to 5 meters, 1 meter, 50 centimeters, 10 centimeters, or other levels. In a specific implementation, the geographical location information may be set to a geographical location information range of a specific sensing target, and may be a cell-level cell identifier, a terminal device identifier, specific geographical location information, or the like that is used to point to a target location of a sensing service.

It should be noted that step S801 may be an optional step.

S802: The first device sends a sensing request to the first access network device. Correspondingly, the first access network device receives the sensing request from the first device.

In step S802, the sensing request may be used to request the first access network device to perform a sensing operation. The sensing operation may be understood as the sensing procedure in the foregoing term introduction (4), and may include at least the signal sending and receiving process in the foregoing term introduction (4). The sensing operation (or the sensing procedure) may further include the first data processing process, the second data processing process, the third data processing process, and the like.

Alternatively, the sensing request may be used to request a sensing result, and a first sensing result requested by using the sensing request may be a result of the sensing procedure in the foregoing term introduction (4). For example, if the sensing procedure includes the signal sending and receiving process and the first data processing process, the sensing result requested by using the sensing request may be a result of the first data processing process, that is, a range/Doppler spectrum or a range/frequency domain/angle spectrum. For another example, if the sensing procedure includes the signal sending and receiving process, the sensing result requested by using the sensing request may be an echo signal.

Alternatively, the sensing request may be used to trigger the first access network device to perform sensing. For example, the sensing request is used to trigger the first access network device to perform the signal sending and receiving process in the foregoing term introduction (4).

For example, the sensing request carries at least one of the following: a sensing data type, sensing configuration information, access network device identifier information, a sensing requirement, and a sensing service identifier. The sensing service identifier carried in the sensing request may be the sensing service identifier carried in the service request, or may be determined based on the sensing service identifier carried in the service request, or may be an identifier re-allocated by the first device. It should be noted that the foregoing information may be sent to the first device by using one message (for example, the sensing request), or may be sent to the first device by using a plurality of messages. For example, one message may carry a subset of the foregoing information.

The sensing data type may be one of the following types: an echo signal; a range/Doppler spectrum or a range/Doppler/angle spectrum; a DV spectrum, an RV spectrum, a DVA spectrum, or an RVA spectrum; and a point cloud including a plurality of data points, where each data point indicates a relative location relative to the first access network device or an absolute location. The sensing data type may also be described as a sensing data format.

It should be understood that the range/Doppler spectrum may be replaced with another data type reflecting a distance, the range/Doppler/angle spectrum may be replaced with another data type reflecting a distance and an angle, the DV spectrum and the RV spectrum may be replaced with other data types reflecting a distance and a velocity, and the DVA spectrum and the RVA spectrum may be replaced with other data types reflecting a distance, a velocity, and an angle. In addition, a name of the data type is not specifically limited in this embodiment of this application. For example, the range/Doppler spectrum may also be referred to as a range/Doppler map, a range/Doppler table, or the like.

The sensing configuration information may be used to configure at least one of the following: a sensing resource, a sensing manner, and a result reporting manner. The sensing resource may include a time domain resource, a frequency domain resource, a space domain resource, a code domain resource, or the like. The sensing manner may be periodic scanning, omnidirectional scanning, or directional scanning. The result reporting manner is periodic reporting or event-triggered reporting.

The access network device identifier information may include identifiers of M access network devices, and the M access network devices include the first access network device, where M is an integer greater than 0. In an implementation, the access network device identifier information may also be replaced with area information of a sensing service, and the first access network device is located in an area of the sensing service.

The sensing requirement may include a service precision (or service resolution), geographical location information, beam direction information, a scanning periodicity, a sensing time, and a quantity of sampling points. In an implementation, the sensing requirement carried in the sensing request in S801 may be determined by the first device based on the service request, and may be specifically determined based on the service type, the sensing target, the service precision, the service requirement, and the like in the service request.

S803: The first access network device sends a sensing signal in response to the sensing request from the first device.

In an implementation, the first access network device may send the sensing signal on the resource configured by using the sensing configuration information or a resource determined by the first access network device.

The first access network device may send the sensing signal through beam scanning.

S804: The first access network device receives an echo signal of the sensing signal.

For specific steps of S803 and S804, refer to the related descriptions of the signal sending and receiving process in the foregoing term introduction (4).

S805: The first access network device sends a sensing result to the first device. Correspondingly, the first device receives the sensing result sent by the first access network device.

The sensing result includes sensing data determined based on the echo signal. For example, the sensing result may be the data type indicated by the sensing data type in the sensing request. For example, if the sensing data type indicates the echo signal, the sensing result may include the echo signal, that is, a result of the signal sending and receiving process. For another example, if the sensing data type indicates the range/Doppler spectrum or the range/frequency domain/angle spectrum, the sensing result may be the range/Doppler spectrum or the range/frequency domain/angle spectrum determined based on the echo signal, that is, the result of the first data processing process.

Optionally, the sensing result may further include at least one of the following: a sensing signal distribution of the first access network device, a beam direction, the scanning periodicity, and the quantity of sampling points. In an implementation, the sensing signal distribution is a waveform of a sensing signal transmitted by a transmit source (that is, the first access network device), and includes a frequency, a phase, an amplitude, and the like of the sensing signal.

In an implementation, if the sensing request carries a result reporting manner, the first access network device may send the sensing result in the result reporting manner.

For example, the result reporting manner carried in the sensing request is periodic reporting, and the first access network device may report the sensing result based on a reporting periodicity. The reporting periodicity may be indicated by the first device, for example, indicated by using the sensing request or other signaling. Alternatively, the reporting periodicity may be preconfigured. Alternatively, the reporting periodicity may be predefined in a protocol. Optionally, there may be a correspondence between a reporting periodicity and a sensing service type (or a sensing business type or a sensing scenario). For example, a reporting periodicity corresponding to a disaster/abnormal object/abnormal event service (that is, a disaster/abnormal object/abnormal event detection scenario) may be a periodicity 1, and a reporting periodicity corresponding to an assisted automatic driving service (that is, an assisted automatic driving scenario) may be a periodicity 2.

For another example, an event that triggers sensing result reporting may be indicated by the first device, for example, indicated by using the sensing request or other signaling. Alternatively, the event that triggers sensing result reporting may be preconfigured. Alternatively, the event that triggers sensing result reporting may be predefined in a protocol. Optionally, there may be a correspondence between an event that triggers sensing result reporting and a sensing service type (or a sensing business type or a sensing scenario). For example, a specified event corresponding to a disaster/abnormal object/abnormal event sensing service (that is, a disaster/abnormal object/abnormal event detection scenario) may be an event 1. For example, the event 1 may be that an uncrewed aerial vehicle that is not allowed (for example, not registered or not authenticated) appears in a sensing area. A specified event corresponding to an assisted automatic driving service (that is, an assisted automatic driving scenario) may be an event 2. For example, the event 2 may be that an obstacle appears on a driving route of a vehicle. A specified event corresponding to a violation detection service may be an event 3. For example, the event 3 may be that a speeding vehicle appears on a road.

Optionally, after receiving the sensing result sent by the first access network device, the first device may further process the sensing data included in the sensing result. For example, after receiving the sensing data, the first device may perform a remaining process of harmonized communication and sensing, to obtain a sensing processing result. For example, if the sensing data is the echo signal (that is, the first access network device performs the signal sending and receiving process in the foregoing term introduction (4)), the first device may perform the first data processing process, the second data processing process, the third data processing process, the fourth data processing process, and the decision making process in the foregoing term introduction (4) on the sensing data, to obtain the sensing processing result. For another example, if the sensing data is the range/Doppler spectrum or the range/Doppler/angle spectrum (that is, the first access network device performs the signal sending and receiving process and the first data processing process in the foregoing term introduction (4)), the first device may perform the second data processing process, the third data processing process, the fourth data processing process, and the decision making process in the foregoing term introduction (4) on the sensing data, to obtain the sensing processing result.

It should be noted that this embodiment of this application is described by using only an example in which the first access network device performs sensing. In a specific embodiment, a plurality of access network devices may perform sensing to provide a sensing service. For a processing process of each access network device, refer to the processing process of the first access network device. Details are not described herein again. Further, if a plurality of access network devices assist in providing a sensing service, the first device may deduplicate sensing results sent by the plurality of access network devices, match a sensing target, and the like in the decision making process.

S806: The first device sends the sensing processing result to the second device. Correspondingly, the second device receives the sensing processing result from the first device.

It should be noted that step S806 may be an optional step.

An area sensing map scenario is used as an example. After receiving the sensing result sent by the first access network device, the first device may process the sensing result to obtain a map result. Optionally, the second device may match a terminal device (for example, a vehicle) that requests a sensing service with the map result, and send the map result and a specific status of the terminal device on a map to the terminal device.

A traffic violation service is used as an example. After receiving the sensing result sent by the first access network device, the first device may process the sensing result to obtain a vehicle driving status. Further, it may be determined, with reference to road information (a lane location, a traffic light status, and the like) and the vehicle driving status, whether vehicle violation (such as parking violation, speeding, over-height, or red-light running) occurs. When the violation occurs, a related device or module may be triggered through a wireless interface, a wired connection, or the like, to perform violation capturing (photographing, recording, or the like) and report the violation to the second device.

It should be noted that the foregoing operations of determining, with reference to the road information and the vehicle driving status, whether the vehicle violation occurs, and triggering the related device or module to capture the violation when the violation occurs may alternatively be performed by the second device.

An abnormal object detection service is used as an example. After receiving the sensing result sent by the first access network device, the first device may process the sensing result, determine an abnormal situation, and report a determining result to the second device. It should be understood that the first device may alternatively process the sensing result to obtain a detection result, for example, a location, a size, and a shape of a detected object, and report the detection result to the second device. Whether the object is an abnormal object may be determined by the second device.

In this embodiment of this application, a harmonized communication and sensing architecture (that is, the harmonized communication and sensing structure described in Example 2) is designed, and triggering, configuration, execution, processing, reporting, and other functions of a sensing function may be implemented through interaction between the second device, the first device, and the first access network device, so as to implement execution of a sensing service in a communication system. In addition, in this embodiment of this application, the first device indicates the sensing data type, the sensing configuration information, the access network device identifier information, the sensing requirement, and other information to help improve accuracy of sensing by the first access network device.

The sensing process is described above. In this process, the first access network device may be selected by the first device from the plurality of access network devices. For example, before the first device triggers, by using the sensing request, the first access network device to perform sensing, the first device may obtain sensing-related information of an access network device. In a specific implementation, the first device may trigger the access network device to perform reporting, or the access network device may actively perform reporting. The first device may determine, based on the sensing-related information of the access network device, that the access network device performing a sensing operation includes the first access network device.

The first access network device is used as an example. The first access network device may send sensing-related information of the first access network device to the first device. The sensing-related information of the first access network device may include at least one of the following: location information of the first access network device, sensing range information of the first access network device, and sensing capability information of the first access network device.

Specifically, the location information of the first access network device may be location information of one or more antennas of the first access network device, or may be location information of one or more transmission reception points (transmission reception point, TRP), or may be location information of one or more distributed units (distributed unit, DU), or may be location information of one or more complete access network devices. Specifically, the sensing range information of the first access network device may be a cell list, a tracking area (tracking area, TA) list, a maximum sensing radius of the access network device, an angle that can be sensed by the access network device, or the like.

Optionally, the sensing range information of the first access network device may indicate a sensing range (or a sensing radius) corresponding to a sensing precision supported by the first access network device. The sensing precision supported by the first access network device may include one or more precisions. Further, if the sensing precision supported by the first access network device includes a plurality of precisions, the sensing range information of the first access network device may indicate a sensing range corresponding to each precision. For example, the sensing range information of the first access network device may indicate that a sensing range corresponding to a sensing precision 1 is a range 1 (for example, a radius 1), and a sensing range corresponding to a sensing precision 2 is a range 2 (for example, a radius 2).

Alternatively, the sensing range information of the first access network device may indicate a maximum sensing range (or a maximum sensing radius) of the first access network device.

The sensing capability information includes at least one of the following: a sensing precision, an echo signal processing support flag, a sensing signal scanning periodicity, a sensing signal bandwidth, a sensing function support flag, and an echo signal processing capability, where the echo signal processing support flag indicates a capability of supporting echo signal processing, and the sensing function support flag indicates that a sensing operation is supported.

It may be understood that the sensing precision in the sensing capability information may be understood as a sensing precision supported by the first access network device, and the sensing precision supported by the first access network device may include one or more precisions. In an implementation, the sensing precision supported by the first access network device may include the service precision in the sensing requirement. The sensing signal scanning periodicity in the sensing capability information may be understood as a scanning periodicity supported by the first access network device, and the scanning periodicity supported by the first access network device may include one or more scanning periodicities. In an implementation, the scanning periodicity supported by the first access network device may include the scanning periodicity in the sensing requirement.

In a specific implementation, the sensing function support flag may be indicated by using one bit. When the first access network device supports the sensing function, the sensing function support flag may be set to 1. When the first access network device does not support the sensing function, a value of the sensing function support flag is 0.

For example, the processing capability is one of the following capabilities:
sending a sensing signal, and receiving an echo signal, that is, supporting the signal sending and receiving process in the foregoing term introduction (4);
sending a sensing signal, and determining a range/Doppler spectrum or a range/Doppler/angle spectrum based on an echo signal, that is, supporting the signal sending and receiving process and the first data processing process in the foregoing term introduction (4);
sending a sensing signal, determining a range/Doppler spectrum or a range/Doppler/angle spectrum based on an echo signal, and determining a DV spectrum, a DVA spectrum, an RV spectrum, or an RVA spectrum based on the range/Doppler spectrum or the range/Doppler/angle spectrum, that is, supporting the signal sending and receiving process, the first data processing process, and the second data processing process in the foregoing term introduction (4); and
sending a sensing signal, determining a range/Doppler spectrum or a range/Doppler/angle spectrum based on an echo signal, determining a DV spectrum, a DVA spectrum, an RV spectrum, or an RVA spectrum based on the range/Doppler spectrum or the range/Doppler/angle spectrum, and determining a point cloud based on the DV spectrum, the DVA spectrum, the RV spectrum, or the RVA spectrum, that is, supporting the signal sending and receiving process, the first data processing process, the second data processing process, and the third data processing process in the foregoing term introduction (4), where the point cloud includes a plurality of data points, and each data point indicates a relative location relative to the first access network device or an absolute location.

In a specific implementation, the range/Doppler spectrum or the range/Doppler/angle spectrum may be set to a capability level 1; the range/Doppler spectrum or the range/Doppler/angle spectrum is determined based on the echo signal, and the DV spectrum, the DVA spectrum, the RV spectrum, or the RVA spectrum is determined based on the range/Doppler spectrum or the range/Doppler/angle spectrum and is set to a capability level 2; and so on. When the processing capability indicates the capability level 1, it indicates that the first access network device supports only determining of the range/Doppler spectrum or the range/Doppler/angle spectrum based on the echo signal. When the capability level is set to a higher level, it indicates that the first access network device can support the capability level and a processing capability lower than the capability level.

In an example, the sensing capability information may be capability information of an access network device level. Alternatively, the sensing capability information may be capability information of a frequency band level or a frequency level. For example, a band 1 supports a sensing function, and a band 2 does not support a sensing function. Alternatively, the sensing capability information may be a combination of capabilities of a plurality of levels.

It should be noted that the sensing range information of the first access network device may be reported to the first device as separate information, or may be reported to the first device as a part of the sensing capability information of the first access network device. It may be understood that each piece of information in the sensing capability information of the first access network device may alternatively be reported to the first device as separate information. Herein, "as separate information" may be understood as being outside the sensing capability information of the first access network device, instead of being used as a part of the sensing capability information of the first access network device.

In an example, the first device may receive sensing-related information of N access network devices including the first access network device, where N is an integer greater than 0. The first device may determine M access network devices based on the sensing-related information of the N access network devices. The M access network devices include the first access network device. The M access network devices are the M access network devices indicated by the access network device identifier information carried in the sensing request.

Specifically, the first device may determine, based on the sensing-related information of the N access network devices and the service request sent by the second device, an access network device that performs a sensing operation.

For example, the first device may determine an access network device range based on a location of an access network device, a sensing range of the access network device, and the sensing target indicated by the service request, and determine, based on the service precision, the service type, and the like that are indicated by the service request, and sensing capability information of the access network device, the access network device that performs the sensing operation within the access network device range.

For another example, the first device may determine an access network device range based on a location of an access network device, a sensing range of the access network device, and the sensing target indicated by the service request, and the access network device that performs the sensing operation may be determined through interaction by an access network device within the access network device range. For example, the plurality of access network devices may be controlled by one access network device, and the access network device may determine the access network device that performs the sensing operation. For example, after an access network device (for example, the first access network device) senses a sensing target, the access network device may send a sensing result to a neighboring access network device, and the neighboring access network device determines, based on the sensing result, whether the first access network device needs to continue to perform a sensing operation and notifies the first access network device.

In a scenario in which the first access network device includes a plurality of DUs or is associated with a plurality of IAB-DUs, the first device or the first access network device may determine, based on a location of the first access network device, a sensing range of the first access network device, and the sensing target indicated by the service request, a node specifically for performing a sensing task in the first access network device.

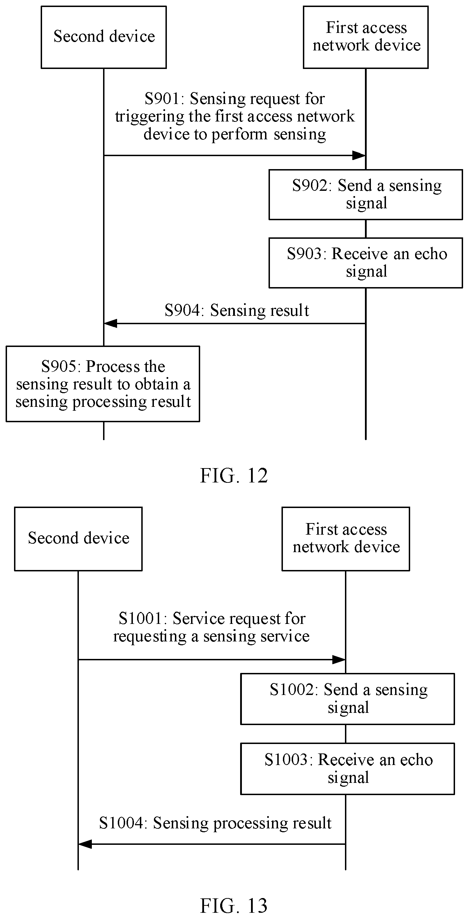

With reference to the harmonized communication and sensing architecture described in Example 1, this application provides a communication method. Details are shown in FIG. 12.

S901: A second device sends a sensing request to a first access network device. Correspondingly, the first access network device receives the sensing request from the second device.

In this embodiment of this application, the second device may be the sensing server in the harmonized communication and sensing architecture described in Example 1.

The sensing request is similar to the sensing request in S802. For details, refer to the related descriptions of the sensing request in S802. Details are not described herein again.

S902: The first access network device sends a sensing signal in response to the sensing request from the second device.

In an implementation, the first access network device may send the sensing signal on the resource configured by using the sensing configuration information or a resource determined by the first access network device.

The first access network device may send the sensing signal through beam scanning.

S903: The first access network device receives an echo signal of the sensing signal.

S904: The first access network device sends a sensing result to the second device. Correspondingly, the second device receives the sensing result sent by the first access network device.

For details of step S904, refer to the related descriptions of S805. Details are not described herein again.

S905: The second device processes the sensing result to obtain a sensing processing result.

An area sensing map scenario is used as an example. After receiving the sensing result sent by the first access network device, the second device may process the sensing result to obtain a map result. Optionally, the second device may further match a terminal device (for example, a vehicle) that requests a sensing service with the map result, and send the map result and a specific status of the terminal device on a map to the terminal device.

A traffic violation service is used as an example. After receiving the sensing result sent by the first access network device, the second device may process the sensing result to obtain a vehicle driving status. Further, it may be determined, with reference to road information (a lane location, a traffic light status, and the like) and the vehicle driving status, whether vehicle violation (such as parking violation, speeding, over-height, or red-light running) occurs. When the violation occurs, a related device or module may be triggered through a wireless interface, a wired connection, or the like, to perform violation capturing (photographing, recording, or the like).

An abnormal object detection service is used as an example. After receiving the sensing result sent by the first access network device, the second device may process the sensing result, and determine an abnormal situation.

In the sensing process based on the harmonized communication and sensing structure in Example 1, before sending the sensing request, the second device may also determine the first access network device. A specific process may also be performed in the manner in which the first device determines the first access network device in the method in FIG. 11. Similarities are not described again.

In the method in FIG. 12, functions of the first device and the second device in the method in FIG. 11 are implemented by using one device (that is, the second device in the method in FIG. 12). Interaction between the first access network device and the first device in the method in FIG. 11 may be understood as interaction between the first access network device and the second device in the method in FIG. 12. Therefore, for FIG. 12, refer to the related descriptions in the method in FIG. 11. Details are not described herein again.

In this embodiment of this application, a harmonized communication and sensing architecture (that is, the harmonized communication and sensing structure described in Example 1) is designed, and triggering, configuration, execution, processing, reporting, and other functions of a sensing function may be implemented through interaction between the second device and the first access network device, so as to implement execution of a sensing service in a communication system. In addition, in this embodiment of this application, the second device indicates the sensing data type, the sensing configuration information, the access network device identifier information, the sensing requirement, and other information to help improve accuracy of sensing by the first access network device.

With reference to the harmonized communication and sensing architecture described in Example 3, FIG. 13 is a schematic flowchart of a communication method according to this application. The method includes the following steps.

S1001: A second device sends a service request to a first access network device. Correspondingly, the first access network device receives the service request from the second device.

The service request herein is similar to the service request in S801. For details, refer to the related descriptions in S801. Details are not described herein again.

It should be noted that, different from the service request in S801, the request message in S1001 may further carry access network device identifier information or area information of a sensing service.

S1002: The first access network device sends a sensing signal in response to the service request from the second device.

In an implementation, a resource for sending the sensing signal may be determined by the first access network device based on the service request.

In another implementation, a resource for sending the sensing signal may alternatively be configured by the second device by using the service request.

In addition, the first access network device may further determine, based on the service request, a sending manner of the sensing signal, for example, a quantity of sampling points, a beam direction, and a scanning periodicity.

S1003: The first access network device receives an echo signal of the sensing signal.

In an implementation, after receiving the echo signal, the first access network device may process the echo signal to obtain a sensing processing result.

Specifically, the first access network device may perform a first data processing process, a second data processing process, a third data processing process, a fourth data processing process, and a decision making process on the echo signal to obtain the sensing processing result.

For the first data processing process, the second data processing process, the third data processing process, the fourth data processing process, and the decision making process, refer to the related descriptions of the harmonized communication and sensing in the foregoing term descriptions. Details are not described herein again.

S1004: The first access network device sends the sensing processing result to the second device. Correspondingly, the second device receives the sensing processing result from the first access network device.

In this embodiment of this application, a harmonized communication and sensing architecture (that is, the harmonized communication and sensing structure described in Example 3) is designed, and triggering, configuration, execution, processing, reporting, and other functions of a sensing function may be implemented through interaction between the second device and the first access network device, so as to implement execution of a sensing service in a communication system. In addition, in this embodiment of this application, an access network device implements a harmonized communication and sensing technology, so that resources of a core network and an application layer can be reduced.

According to the three methods provided in embodiments of this application, sensing service requesting, execution, processing, and reporting procedures in different architectures can be implemented.

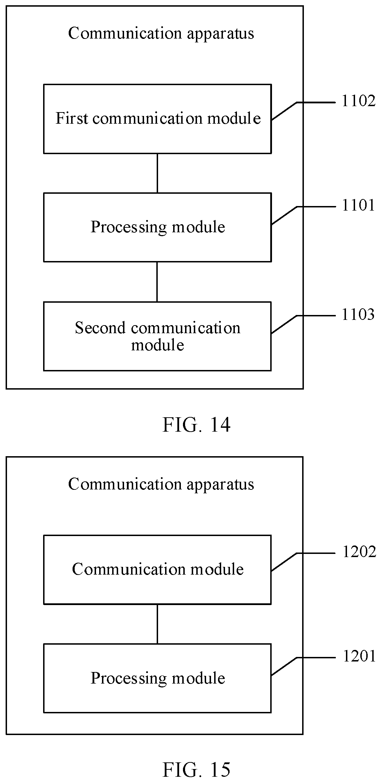

Based on a same technical concept as the method embodiments, an embodiment of this application provides a communication apparatus. A structure of the communication apparatus may be shown in FIG. 14, and includes a processing module 1101, a first communication module 1102, and a second communication module 1103. The first communication module 1102 and the second communication module 1103 may be a same communication module, or may be different communication modules.

In an implementation, the communication apparatus may be specifically configured to implement the method performed by the first access network device in the embodiment in FIG. 11 or FIG. 12. The apparatus may be the first access network device, or may be a chip or a chip group in the first access network device, or a part that is in the chip and that is configured to perform a related method function. The processing module 1101 is configured to: by using the first communication module 1102, send a sensing signal in response to a sensing request from a first device, where the sensing request carries at least one of the following: a sensing data type, sensing configuration information, access network device identifier information, a sensing requirement, and a sensing service identifier; receive an echo signal of the sensing signal by using the first communication module 1102; and send a sensing result to the first device by using the second communication module 1103, where the sensing result includes sensing data determined based on the echo signal.

Optionally, the processing module 1101 is further configured to send at least one of the following to the first device by using the second communication module 1103: location information of the first access network device, sensing range information of the first access network device, and sensing capability information of the first access network device.

In an implementation, the communication apparatus may be specifically configured to implement the method performed by the first device in the embodiment in FIG. 11. The apparatus may be the first device, or may be a chip or a chip group in the first device, or a part that is in the chip and that is configured to perform a related method function. The processing module 1101 is configured to: send a sensing request to a first access network device by using the first communication module 1102, where the sensing request carries at least one of the following: a sensing data type, sensing configuration information, access network device identifier information, a sensing requirement, and a first sensing service identifier; and receive a sensing result from the first access network device by using the first communication module 1102.

Optionally, the processing module 1101 is further configured to receive first information of N access network devices by using the first communication module 1102, where the first information includes at least one of the following: location information of a corresponding access network device, sensing range information of the corresponding access network device, and sensing capability information of the corresponding access network device, the N access network devices include the first access network device, and N is an integer greater than 0.

The processing module 1101 may be further configured to determine, based on the first information of the N access network devices, that an access network device performing a sensing operation includes the first access network device.

The processing module 1101 may be further configured to: before sending the sensing request to the first access network device by using the first communication module 1102, receive a service request from a second device by using the second communication module 1103, where the service request is used to request a sensing service, and the service request carries at least one of the following: a service type, a sensing target, a second sensing service identifier, a service precision, sensing configuration information, and a service requirement.

Optionally, the processing module 1101 may be further configured to: after receiving the sensing result from the first access network device by using the first communication module 1102, send a sensing processing result to the second device by using the second communication module 1103, where the sensing processing result is determined based on the sensing result.

In an implementation, the communication apparatus may be specifically configured to implement the method performed by the first access network device in the embodiment in FIG. 13. The apparatus may be the first access network device, or may be a chip or a chip group in the first access network device, or a part that is in the chip and that is configured to perform a related method function. The processing module 1101 is configured to: by using the first communication module 1102, send a sensing signal in response to a service request from the second device, where the service request carries at least one of the following: a service type, a sensing target, a sensing service identifier, a service precision, sensing configuration information, and a service requirement; receive an echo signal of the sensing signal by using the first communication module 1102; and send a sensing processing result to the second device by using the second communication module 1103, where the sensing processing result is determined based on the echo signal.

Optionally, the processing module 1101 is further configured to: determine, based on the echo signal in one or more beam directions, a range/Doppler spectrum or a range/frequency domain/angle spectrum corresponding to the beam direction; determine, based on the range/Doppler spectrum or the range/frequency domain/angle spectrum corresponding to the one or more beam directions, a D/V spectrum, a D/V/A spectrum, or an R/V spectrum corresponding to the beam direction; and determine a point cloud based on the D/V spectrum, the D/V/A spectrum, or the R/V spectrum corresponding to the one or more beam directions, where the point cloud includes a plurality of data points, each data point indicates a relative location relative to the first access network device, and the sensing processing result includes the point cloud.

For example, when sending the sensing signal by using the first communication module 1102, the processing module 1101 is specifically configured to: send the sensing signal to the sensing target on a first resource by using the first communication module 1102, where the first resource is determined based on the service type and/or the service precision, or the first resource is configured by using the sensing configuration information.

Based on a same technical concept as the method embodiments, an embodiment of this application provides another communication apparatus. A structure of the communication apparatus may be shown in FIG. 15, and includes a processing module 1201 and a communication module 1202.

In an implementation, the communication apparatus may be specifically configured to implement the method performed by the second device in the embodiment in FIG. 11 or FIG. 13. The apparatus may be the second device, or may be a chip or a chip group in the second device, or a part that is in the chip and that is configured to perform a related method function. The processing module 1201 is configured to: send a service request to a communication device by using the communication module 1202, where the service request is used to request a sensing service, and the service request carries at least one of the following: a service type, a sensing target, a sensing service identifier, a service precision, and sensing configuration information; and receive a sensing processing result from the communication device by using the communication module 1202.

In an implementation, the communication apparatus may be specifically configured to implement the method performed by the second device in the embodiment in FIG. 12. The apparatus may be the second device, or may be a chip or a chip group in the second device, or a part that is in the chip and that is configured to perform a related method function. The processing module 1201 is configured to: send a sensing request to a first access network device by using the communication module 1202, where the sensing request carries at least one of the following: a sensing data type, a sensing manner, sensing configuration information, access network device identifier information, and a sensing requirement; and receive a sensing result from the first access network device by using the communication module 1202.

Optionally, the processing module 1201 is further configured to receive first information of N access network devices by using the communication module 1202, where the first information includes at least one of the following: location information of a corresponding access network device, sensing range information of the corresponding access network device, and sensing capability information of the corresponding access network device, the N access network devices include the first access network device, and N is an integer greater than 0.

The processing module 1201 may be further configured to determine, based on the first information of the N access network devices, that an access network device performing a sensing operation includes the first access network device.

Division into the modules in embodiments of this application is an example, and is merely logical function division. During actual implementation, there may be another division manner. In addition, functional modules in embodiments of this application may be integrated into one processor, or each of the modules may exist alone physically, or two or more modules may be integrated into one module. The integrated module may be implemented in a form of hardware, or may be implemented in a form of a software functional module. It may be understood that, for functions or implementations of the modules in embodiments of this application, further refer to related descriptions in the method embodiments.

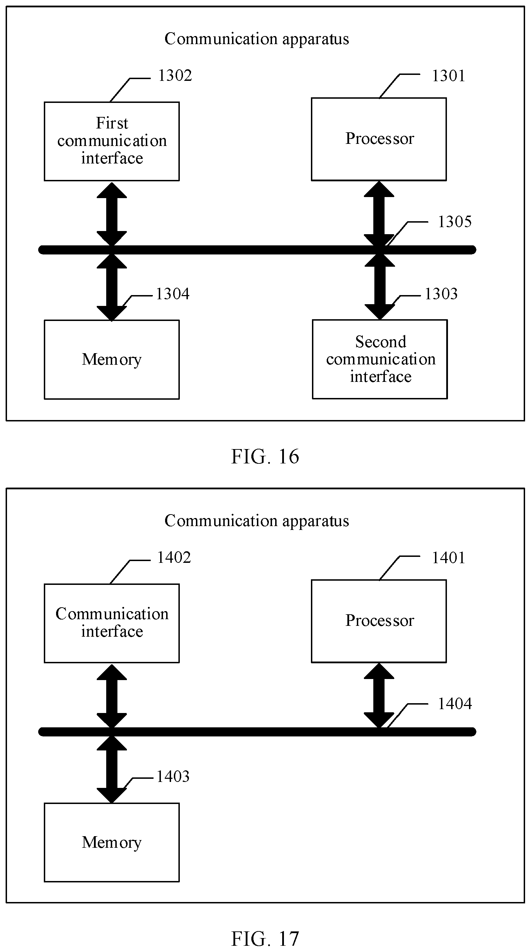

In a possible manner, the communication apparatus may be shown in FIG. 16. The apparatus may be a communication device or a chip in the communication device. The communication device may be the terminal device in the foregoing embodiment or the network device in the foregoing embodiment. The apparatus includes a processor 1301 and a first communication interface 1302, may further include a second communication interface 1303, and may further include a memory 1304. The processing module 1101 may be the processor 1301. The first communication module 1102 may be the first communication interface 1302. The first communication interface 1302 and the second communication interface 1303 may be a same communication interface, or may be different communication interfaces.

The processor 1301 may be a CPU, a digital processing unit, or the like. The first communication interface 1302 may be a transceiver, an interface circuit such as a transceiver circuit, a transceiver chip, or the like. The apparatus further includes the memory 1304, configured to store a program executed by the processor 1301. The memory 1304 may be a non-volatile memory, such as a hard disk drive (hard disk drive, HDD) or a solid-state drive (solid-state drive, SSD), or may be a volatile memory (volatile memory), such as a random access memory (random access memory, RAM). The memory 1304 is any other medium that can carry or store expected program code in a form of an instruction or a data structure and that can be accessed by a computer, but is not limited thereto.

The processor 1301 is configured to execute the program code stored in the memory 1304, and is specifically configured to perform an action of the processing module 1101. The first communication interface 1302 is specifically configured to perform an action of the first communication module 1102. The second communication interface 1303 is specifically configured to perform an action of the second communication module 1103. Details are not described herein again in this application. Details are not described herein again in this application.

A specific connection medium between the first communication interface 1302, the second communication interface 1303, the processor 1301, and the memory 1304 is not limited in this embodiment of this application. In this embodiment of this application, the first communication interface 1302, the second communication interface 1303, the processor 1301, and the memory 1304 are connected by using a bus 1305 in FIG. 16. The bus is represented by using a thick line in FIG. 16. A manner of a connection between other components is merely an example for description, and is not limited thereto. The bus may be classified into an address bus, a data bus, a control bus, and the like. For ease of representation, only one thick line is used to represent the bus in FIG. 16, but this does not mean that there is only one bus or only one type of bus.

In another possible manner, the communication apparatus may be shown in FIG. 17. The apparatus may be a communication device or a chip in the communication device. The communication device may be the terminal device in the foregoing embodiment or the network device in the foregoing embodiment. The apparatus includes a processor 1401 and a communication interface 1402, and may further include a memory 1403. The processing module 1201 may be the processor 1401. The communication module 1202 may be the communication interface 1402.

The processor 1401 may be a CPU, a digital processing unit, or the like. The communication interface 1402 may be a transceiver, an interface circuit such as a transceiver circuit, a transceiver chip, or the like. The apparatus further includes the memory 1403, configured to store a program executed by the processor 1401. The memory 1403 may be a non-volatile memory such as an HDD or an SSD, or may be a volatile memory such as a RAM. The memory 1403 is any other medium that can carry or store expected program code in a form of an instruction or a data structure and that can be accessed by a computer, but is not limited thereto.

The processor 1401 is configured to execute the program code stored in the memory 1403, and is specifically configured to perform an action of the processing module 1201. Details are not described herein again in this application. The communication interface 1402 is specifically configured to perform an action of the communication module 1202. Details are not described herein again in this application.

A specific connection medium between the communication interface 1402, the processor 1401, and the memory 1403 is not limited in this embodiment of this application. In this embodiment of this application, the memory 1403, the processor 1401, and the communication interface 1402 are connected through a bus 1404 in FIG. 17. The bus is represented by using a thick line in FIG. 17. A manner of a connection between other components is merely an example for description, and is not limited thereto. The bus may be classified into an address bus, a data bus, a control bus, and the like. For ease of representation, only one thick line is used to represent the bus in FIG. 17, but this does not mean that there is only one bus or only one type of bus.

An embodiment of this application further provides a computer-readable storage medium, configured to store computer software instructions that need to be performed by the foregoing processor. The computer software instructions include a program that needs to be performed by the foregoing processor.

An embodiment of this application further provides a communication system, including a communication apparatus configured to implement a function of the first access network device in the embodiment in FIG. 11, a communication apparatus configured to implement a function of the first device in the embodiment in FIG. 11, and a communication apparatus configured to implement a function of the second device in the embodiment in FIG. 11.

An embodiment of this application further provides a communication system, including a communication apparatus configured to implement a function of the first access network device in the embodiment in FIG. 12 and a communication apparatus configured to implement a function of the first device in the embodiment in FIG. 12.

An embodiment of this application further provides a communication system, including a communication apparatus configured to implement a function of the first access network device in the embodiment in FIG. 13 and a communication apparatus configured to implement a function of the second device in the embodiment in FIG. 13.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may alternatively be stored in a computer-readable memory that can instruct a computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so as to generate computer-implemented processing. Therefore, the instructions executed on the computer or the another programmable device provide steps for implementing a specific function in one or more processes in the flowcharts and/or in one or more blocks in the block diagrams.

## Claims

1. A communication method, wherein the method comprises:
sending a sensing signal in response to a sensing request from a first device, wherein the sensing request carries at least one of the following: a sensing data type, sensing configuration information, access network device identifier information, a sensing requirement, and a sensing service identifier;
receiving an echo signal of the sensing signal; and
sending a sensing result to the first device, wherein the sensing result comprises sensing data determined based on the echo signal.

2. The method according to claim 1, wherein the sensing data type is one of the following types:
an echo signal;
a range/Doppler spectrum or a range/Doppler/angle spectrum;
a distance/velocity DV spectrum, a distance/velocity/angle DVA spectrum, a range/velocity RV spectrum, or a range/velocity/angle RVA spectrum; and
a point cloud comprising a plurality of data points, wherein each data point indicates a relative location relative to a first access network device.

3. The method according to claim 1 or 2, wherein the sensing configuration information is used to configure at least one of the following: a sensing manner, a sensing resource, and a result reporting manner.

4. The method according to any one of claims 1 to 3, wherein the sensing requirement comprises a service precision, geographical location information, beam direction information, a scanning periodicity, a sensing time, and a quantity of sampling points.

5. The method according to any one of claims 1 to 4, wherein the sensing result further comprises at least one of the following: the sensing service identifier, an identifier of the first access network device, a timestamp, a sensing signal distribution of the first access network device, a beam direction, the scanning periodicity, and the quantity of sampling points.

6. The method according to any one of claims 1 to 5, wherein the method further comprises:
sending at least one of the following to the first device: location information of the first access network device, sensing range information of the first access network device, and sensing capability information of the first access network device.

7. The method according to claim 6, wherein the sensing capability information comprises at least one of the following: a sensing precision, an echo signal processing support flag, a sensing signal scanning periodicity, a sensing signal bandwidth, a sensing function support flag, and an echo signal processing capability, wherein the echo signal processing support flag indicates that echo signal processing is supported, and the sensing function support flag indicates that a sensing operation is supported.

8. The method according to claim 7, wherein the processing capability is one of the following capabilities:
determining a range/Doppler spectrum or a range/Doppler/angle spectrum based on an echo signal;
determining a range/Doppler spectrum or a range/Doppler/angle spectrum based on an echo signal, and determining a DV spectrum, a DVA spectrum, an RV spectrum, or an RVA spectrum based on the range/Doppler spectrum or the range/Doppler/angle spectrum; and
determining a range/Doppler spectrum or a range/Doppler/angle spectrum based on an echo signal, determining a DV spectrum, a DVA spectrum, an RV spectrum, or an RVA spectrum based on the range/Doppler spectrum or the range/Doppler/angle spectrum, and determining a point cloud based on the DV spectrum, the DVA spectrum, the RV spectrum, or the RVA spectrum, wherein the point cloud comprises a plurality of data points, and each data point indicates a relative location relative to the first access network device.

9. A communication method, wherein the method comprises:
sending a sensing request to a first access network device, wherein the sensing request carries at least one of the following: a sensing data type, sensing configuration information, access network device identifier information, a sensing requirement, and a first sensing service identifier; and
receiving a sensing result from the first access network device.

10. The method according to claim 9, wherein the sensing data type is one of the following types:
an echo signal;
a range/Doppler spectrum or a range/Doppler/angle spectrum;
a distance/velocity DV spectrum, a distance/velocity/angle DVA spectrum, a range/velocity RV spectrum, or a range/velocity/angle RVA spectrum; and
a point cloud comprising a plurality of data points, wherein each data point indicates a relative location relative to the first access network device.

11. The method according to claim 9 or 10, wherein the sensing configuration information is used to configure at least one of the following: a sensing manner, a sensing resource, and a result reporting manner.

12. The method according to any one of claims 9 to 11, wherein the sensing requirement comprises a service precision, geographical location information, beam direction information, a scanning periodicity, a sensing time, and a quantity of sampling points.

13. The method according to any one of claims 9 to 12, wherein the method further comprises:
receiving first information of N access network devices, wherein the first information comprises at least one of the following: location information of a corresponding access network device, sensing range information of the corresponding access network device, and sensing capability information of the corresponding access network device, the N access network devices comprise the first access network device, and N is an integer greater than 0; and
determining, based on the first information of the N access network devices, that an access network device performing a sensing operation comprises the first access network device.

14. The method according to any one of claims 9 to 13, wherein before the sending a sensing request to a first access network device, the method further comprises:
receiving a service request from a second device, wherein the service request is used to request a sensing service, and the service request carries at least one of the following: a service type, a sensing target, a second sensing service identifier, a service precision, sensing configuration information, and a service requirement; and
after the receiving a sensing result from the first access network device, the method further comprises:
sending a sensing processing result to the second device, wherein the sensing processing result is determined based on the sensing result.

15. The method according to any one of claims 9 to 14, wherein the service type is one or more of the following types: an area sensing map, assisted automatic driving, specific event detection, obstacle detection, lane detection, traffic violation detection, and abnormal object detection.

16. A communication method, wherein the method comprises:
sending a service request to a communication device, wherein the service request is used to request a sensing service, and the service request carries at least one of the following: a service type, a sensing target, a sensing service identifier, a service precision, sensing configuration information, and a service requirement; and
receiving a sensing processing result from the communication device.

17. The method according to claim 16, wherein the sensing configuration information is used to configure at least one of the following: a sensing manner, a sensing resource, and a result reporting manner.

18. The method according to claim 16 or 17, wherein the service type is one or more of the following types: an area sensing map, assisted automatic driving, specific event detection, obstacle detection, lane detection, traffic violation detection, and abnormal object detection.

19. The method according to any one of claims 16 to 18, wherein the communication device is a core network device or an access network device.

20. A communication method, wherein the method comprises:
sending a sensing signal in response to a service request from a second device, wherein the service request carries at least one of the following: a service type, a sensing target, a sensing service identifier, a service precision, sensing configuration information, and a service requirement;
receiving an echo signal of the sensing signal; and
sending a sensing processing result to the second device, wherein the sensing processing result is determined based on the echo signal.

21. The method according to claim 20, wherein the method further comprises:
determining, based on the echo signal in one or more beam directions, a range/Doppler spectrum or a range/Doppler/angle spectrum corresponding to the beam direction;
determining, based on the range/Doppler spectrum or the range/Doppler/angle spectrum corresponding to the one or more beam directions, a distance/velocity DV spectrum, a distance/velocity/angle DVA spectrum, a range/velocity RV spectrum, or a range/velocity/angle RVA spectrum corresponding to the beam direction; and
determining a point cloud based on the DV spectrum, the DVA spectrum, the RV spectrum, or the RVA spectrum corresponding to the one or more beam directions, wherein the point cloud comprises a plurality of data points, each data point indicates a relative location relative to a first access network device, and the sensing processing result comprises the point cloud.

22. The method according to claim 20 or 21, wherein the sensing configuration information is used to configure at least one of the following: a sensing manner, a sensing resource, and a result reporting manner.

23. The method according to any one of claims 20 to 22, wherein the sending a sensing signal comprises:
sending the sensing signal to the sensing target on a first resource, wherein the first resource is determined based on the service type and/or the service precision, or the first resource is configured by using the sensing configuration information.

24. The method according to claim 23, wherein the sensing target is a fixed object, or the sensing target is a moving object, or the sensing target is a geographical area, or the sensing target is an identifier.

25. A communication apparatus, wherein the apparatus comprises:
a processing module, configured to: by using a first communication module, send a sensing signal in response to a sensing request from a first device, wherein the sensing request carries at least one of the following: a sensing data type, sensing configuration information, access network device identifier information, a sensing requirement, and a sensing service identifier;
receive an echo signal of the sensing signal by using the first communication module; and
send a sensing result to the first device by using a second communication module, wherein the sensing result comprises sensing data determined based on the echo signal.

26. The apparatus according to claim 25, wherein the sensing data type is one of the following types:
an echo signal;
a range/Doppler spectrum or a range/Doppler/angle spectrum;
a distance/velocity DV spectrum, a distance/velocity/angle DVA spectrum, a range/velocity RV spectrum, or a range/velocity/angle RVA spectrum; and
a point cloud comprising a plurality of data points, wherein each data point indicates a relative location relative to a first access network device.

27. The apparatus according to claim 25 or 26, wherein the sensing configuration information is used to configure at least one of the following: a sensing manner, a sensing resource, and a result reporting manner.

28. The apparatus according to any one of claims 25 to 27, wherein the sensing requirement comprises a service precision, geographical location information, beam direction information, a scanning periodicity, a sensing time, and a quantity of sampling points.

29. The apparatus according to any one of claims 25 to 28, wherein the sensing result further comprises at least one of the following: the sensing service identifier, an identifier of the first access network device, a timestamp, a sensing signal distribution of the first access network device, a beam direction, the scanning periodicity, and the quantity of sampling points.

30. The apparatus according to any one of claims 25 to 29, wherein the processing module is further configured to:
send at least one of the following to the first device by using the second communication module: location information of the first access network device, sensing range information of the first access network device, and sensing capability information of the first access network device.

31. The apparatus according to claim 30, wherein the sensing capability information comprises at least one of the following: a sensing precision, an echo signal processing support flag, a sensing signal scanning periodicity, a sensing signal bandwidth, a sensing function support flag, and an echo signal processing capability, wherein the echo signal processing support flag indicates that echo signal processing is supported, and the sensing function support flag indicates that a sensing operation is supported.

32. The apparatus according to claim 31, wherein the processing capability is one of the following capabilities:
determining a range/Doppler spectrum or a range/Doppler/angle spectrum based on an echo signal;
determining a range/Doppler spectrum or a range/Doppler/angle spectrum based on an echo signal, and determining a DV spectrum, a DVA spectrum, an RV spectrum, or an RVA spectrum based on the range/Doppler spectrum or the range/Doppler/angle spectrum; and
determining a range/Doppler spectrum or a range/Doppler/angle spectrum based on an echo signal, determining a DV spectrum, a DVA spectrum, an RV spectrum, or an RVA spectrum based on the range/Doppler spectrum or the range/Doppler/angle spectrum, and determining a point cloud based on the DV spectrum, the DVA spectrum, the RV spectrum, or the RVA spectrum, wherein the point cloud comprises a plurality of data points, and each data point indicates a relative location relative to the first access network device.

33. A communication apparatus, wherein the apparatus comprises:
a processing module, configured to: send a sensing request to a first access network device by using a first communication module, wherein the sensing request carries at least one of the following: a sensing data type, sensing configuration information, access network device identifier information, a sensing requirement, and a first sensing service identifier; and
receive a sensing result from the first access network device by using the first communication module.

34. The apparatus according to claim 33, wherein the sensing data type is one of the following types:
an echo signal;
a range/Doppler spectrum or a range/Doppler/angle spectrum;
a distance/velocity DV spectrum, a distance/velocity/angle DVA spectrum, a range/velocity RV spectrum, or a range/velocity/angle RVA spectrum; and
a point cloud comprising a plurality of data points, wherein each data point indicates a relative location relative to the first access network device.

35. The apparatus according to claim 33 or 34, wherein the sensing configuration information is used to configure at least one of the following: a sensing manner, a sensing resource, and a result reporting manner.

36. The apparatus according to any one of claims 33 to 35, wherein the sensing requirement comprises a service precision, geographical location information, beam direction information, a scanning periodicity, a sensing time, and a quantity of sampling points.

37. The apparatus according to any one of claims 33 to 36, wherein the processing module is further configured to:
receive first information of N access network devices by using the first communication module, wherein the first information comprises at least one of the following: location information of a corresponding access network device, sensing range information of the corresponding access network device, and sensing capability information of the corresponding access network device, the N access network devices comprise the first access network device, and N is an integer greater than 0; and
determine, based on the first information of the N access network devices, that an access network device performing a sensing operation comprises the first access network device.

38. The apparatus according to any one of claims 33 to 37, wherein the processing module is further configured to:
before sending the sensing request to the first access network device by using the first communication module, receive a service request from a second device by using a second communication module, wherein the service request is used to request a sensing service, and the service request carries at least one of the following: a service type, a sensing target, a second sensing service identifier, a service precision, sensing configuration information, and a service requirement; and
after receiving the sensing result from the first access network device by using the first communication module, send a sensing processing result to the second device by using the second communication module, wherein the sensing processing result is determined based on the sensing result.

39. The apparatus according to any one of claims 33 to 38, wherein the service type is one or more of the following types: an area sensing map, assisted automatic driving, specific event detection, obstacle detection, lane detection, traffic violation detection, and abnormal object detection.

40. A communication apparatus, wherein the apparatus comprises:
a communication module, configured to communicate with a communication device; and
a processing module, configured to: send a service request to the communication device by using the communication module, wherein the service request is used to request a sensing service, and the service request carries at least one of the following: a service type, a sensing target, a sensing service identifier, a service precision, sensing configuration information, and a service requirement; and
receive a sensing processing result from the communication device by using the communication module.

41. The apparatus according to claim 40, wherein the sensing configuration information is used to configure at least one of the following: a sensing manner, a sensing resource, and a result reporting manner.

42. The apparatus according to claim 40 or 41, wherein the service type is one or more of the following types: an area sensing map, assisted automatic driving, specific event detection, obstacle detection, lane detection, traffic violation detection, and abnormal object detection.

43. The apparatus according to any one of claims 40 to 42, wherein the communication device is a core network device or an access network device.

44. A communication apparatus, wherein the apparatus comprises:
a communication module, configured to communicate with a second device; and
a processing module, configured to: by using the communication module, send a sensing signal in response to a service request from the second device, wherein the service request carries at least one of the following: a service type, a sensing target, a sensing service identifier, a service precision, sensing configuration information, and a service requirement;
receive an echo signal of the sensing signal by using the communication module; and
send a sensing processing result to the second device by using the communication module, wherein the sensing processing result is determined based on the echo signal.

45. The apparatus according to claim 44, wherein the processing module is further configured to:
determine, based on the echo signal in one or more beam directions, a range/Doppler spectrum or a range/Doppler/angle spectrum corresponding to the beam direction;
determine, based on the range/Doppler spectrum or the range/Doppler/angle spectrum corresponding to the one or more beam directions, a distance/velocity DV spectrum, a distance/velocity/angle DVA spectrum, a range/velocity RV spectrum, or a range/velocity/angle RVA spectrum corresponding to the beam direction; and
determine a point cloud based on the DV spectrum, the DVA spectrum, the RV spectrum, or the RVA spectrum corresponding to the one or more beam directions, wherein the point cloud comprises a plurality of data points, each data point indicates a relative location relative to a first access network device, and the sensing processing result comprises the point cloud.

46. The apparatus according to claim 44 or 45, wherein the sensing configuration information is used to configure at least one of the following: a sensing manner, a sensing resource, and a result reporting manner.

47. The apparatus according to any one of claims 44 to 46, wherein when sending the sensing signal by using the communication module, the processing module is specifically configured to:
send the sensing signal to the sensing target on a first resource by using the communication module, wherein the first resource is determined based on the service type and/or the service precision, or the first resource is configured by using the sensing configuration information.

48. The apparatus according to claim 47, wherein the sensing target is a fixed object, or the sensing target is a moving object, or the sensing target is a geographical area, or the sensing target is an identifier.

49. A computer-readable storage medium, wherein the computer-readable storage medium is configured to store computer instructions, and when the computer instructions are run on a computer, the computer is enabled to perform the method according to any one of claims 1 to 8, or the computer is enabled to perform the method according to any one of claims 9 to 15, or the computer is enabled to perform the method according to any one of claims 16 to 19, or the computer is enabled to perform the method according to any one of claims 20 to 24.

50. A computer program product, wherein the computer program product comprises a computer program, and when the computer program runs on a computer, the computer is enabled to perform the method according to any one of claims 1 to 8, or the computer is enabled to perform the method according to any one of claims 9 to 15, or the computer is enabled to perform the method according to any one of claims 16 to 19, or the computer is enabled to perform the method according to any one of claims 20 to 24.
